(19) Europäisches Patentamt
European Patent Office
Office européen des brevets

(11) **EP 3 503 265 A1**

(12) **EUROPEAN PATENT APPLICATION**

(43) Date of publication:
**26.06.2019 Bulletin 2019/26**

(21) Application number: **18210297.0**

(22) Date of filing: **05.12.2018**

(51) Int Cl.:
***H01M 4/137*** *(2010.01)*
***H01M 4/1399*** *(2010.01)*
***H01M 4/583*** *(2010.01)*
***H01M 4/60*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2017 JP 2017243458**
**10.10.2018 JP 2018191369**

(71) Applicant: **Ricoh Company, Ltd.**
**Tokyo 143-8555 (JP)**

(72) Inventors:
- **TAKESHITA, Shuhei**
  **Tokyo, 143-8555 (JP)**
- **NOMURA, Masayoshi**
  **Tokyo, 143-8555 (JP)**
- **ABE, Naoto**
  **Tokyo, 143-8555 (JP)**
- **ITOH, Yoshio**
  **Tokyo, 143-8555 (JP)**
- **DAN, Tatsuya**
  **Tokyo, 143-8555 (JP)**
- **ARAKI, Yuka**
  **Tokyo, 143-8555 (JP)**
- **SUGIHARA, Naoki**
  **Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **ACTIVE MATERIAL, ELECTRODE, AND POWER STORAGE ELEMENT**

(57) An active material is provided. The active material comprises a porous carbon (100) having a plurality of pores (101) forming a three-dimensional network structure and a conductive polymer (102), and at least a part of the plurality of pores (101) contains the conductive polymer (102).

FIG. 1

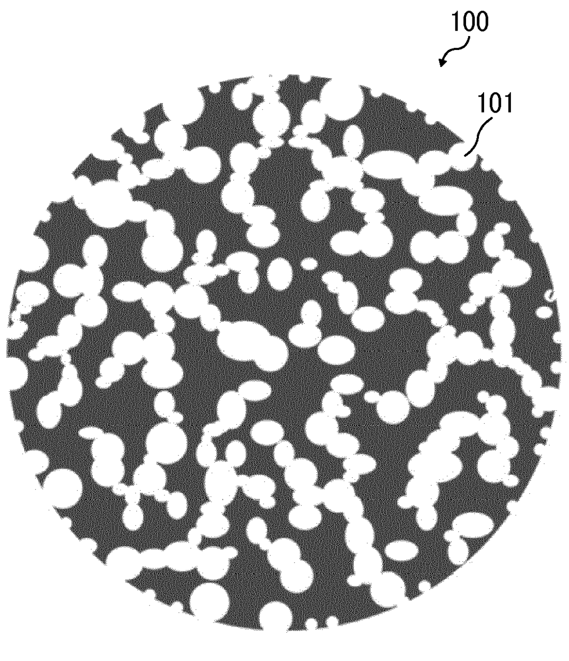


**EP 3 503 265 A1**

## Description

### BACKGROUND

### Technical Field

The present disclosure relates to an active material, an electrode, and a power storage element.

### Description of the Related Art

In recent years, power storage elements capable of increasing energy density have been improved with miniaturization and increasing performance of portable devices, and have become widespread. Furthermore, power storage elements having a higher discharge capacity and excellent safety have also been developed and installed on electric vehicles etc. As such power storage elements, lithium ion secondary batteries are widely used.

On the other hand, as power storage elements for hybrid cars or the like, electric double layer capacitors are used that are capable of charging and discharging at a high speed without any chemical reaction. Since the energy density of the electric double layer capacitors is several tenths of that of the lithium ion secondary batteries, the electric double layer capacitors are required to gain the weight so as to secure a sufficient discharge capacity. Therefore, installation of such a heavy electric double layer capacitor on automobiles prevents improvement of fuel economy.

As power storage elements having high energy density like the lithium ion secondary batteries and high output characteristic like the electric double layer capacitors, lithium ion capacitors are now attracting attention that are equipped with a cathode containing activated carbon and an anode containing graphite and using lithium ion as a carrier ion.

The lithium ion capacitors are able to improve energy density than the electric double layer capacitors when the anode material, capable of occluding and releasing lithium ions, is preliminarily doped with lithium ions by a chemical method etc. to reduce the anode potential and increase the withstand voltage. JP-5228531-B (corresponding to JP-2009-205918-A) proposes a technique for improving energy density by mixing a polymer radical material in the cathode of the lithium ion capacitor.

JP-2016-05 8207-A proposes a nonaqueous electrolyte power storage element using an amorphous porous carbon having communicated mesopores with a pore size of 2 nm or more forming a three-dimensional network structure.

### SUMMARY

An object of the present invention is to provide an active material for use in a power storage element having high energy density and high output characteristics.

In accordance with some embodiments of the present invention, an active material for use in a power storage element having high energy density and high output characteristics is provided. The active material comprises a porous carbon having a plurality of pores forming a three-dimensional network structure and a conductive polymer, and at least a part of the plurality of pores contains the conductive polymer.

In accordance with some embodiments of the present invention, an electrode is provided. The electrode includes the above-described active material.

In accordance with some embodiments of the present invention, a power storage element is provided. The power storage element includes a cathode, an anode, and an electrolytic solution, and at least one of the cathode and the anode is the above-described electrode.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 is a schematic magnified view of a cross section a porous carbon according to an embodiment of the present invention;

FIG. 2 is a schematic magnified view of a cross section an active material particle according to an embodiment of the present invention;

FIG. 3 is an overall schematic diagram of a power storage element containing the active material according to an embodiment of the present invention;

FIG. 4 is a transmission electron microscope (TEM) image of a cross section of a porous carbon A particle used in Example 1;

FIG. 5 is a scanning electron microscope (SEM) image of a cross section of a cathode used in Example 1;
FIG. 6 is a carbon (C) element mapping image of a cross section of the cathode used in Example 1;
FIG. 7 is a sulfur (S) element mapping image of a cross section of the cathode used in Example 1;
FIG. 8 is a graph showing a discharge curve at 0.2-C discharge and a discharge curve at 10-C discharge in Example 1; and
FIG. 9 is a graph showing a discharge curve at 0.2-C discharge and a discharge curve at 10-C discharge in Comparative Example 7.

The accompanying drawings are intended to depict example embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.
Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.
For the sake of simplicity, the same reference number will be given to identical constituent elements such as parts and materials having the same functions and redundant descriptions thereof omitted unless otherwise stated.

Active Material

The active material according to an embodiment of the present invention comprises a porous carbon having a plurality of pores forming a three-dimensional network structure and a conductive polymer, and at least a part of the plurality of pores contains the conductive polymer. The active material may further contain other materials as necessary.
In the present disclosure, electrode materials refer to materials constituting an electrode, such as an active material, a conductive auxiliary agent, a binder, a thickener, and a current collector. In the present disclosure, the active material refers to a substance directly involved in expression of capacity of the power storage element, that is, a substance having a function of occluding or releasing ions within the power storage element. In the present disclosure, "occlusion" broadly refers to incorporation of ions into a material. Examples of the "occlusion" include "adsorption" that refers to physical adsorption of ions to the surface of a material, "intercalation" that refers to intercalation of ions into a crystal structure of a material, and "insertion" that refers to insertion of ions into pores of a material.
Conventionally, when a polymer having a high capacity is used as an active material, a large amount of a conductive auxiliary agent is added thereto since the polymer itself has low conductivity. As a result, it becomes difficult to uniformly mix and disperse the electrode materials such as an activated carbon, the polymer, the conductive auxiliary agent, and the binder, causing agglomeration of the polymer and the conductive auxiliary agent. The active material according to an embodiment of the present invention is achieved based on a finding that, when agglomeration of the polymer and the conductive auxiliary agent occurs, electron transfer is suppressed between the polymer particles, between the polymer and other materials, or between the polymer and the current collector and results in insufficient formation of a path through which electrons pass (i.e., conductive path) in the electrode and deterioration of the output characteristics.
Furthermore, conventionally, the conductive auxiliary agent added in a large amount is not involved in expression of capacity because of having no ability to occlude or release ions. Thus, the active material according to an embodiment of the present invention is achieved based on a finding that mixing a large amount of conductive auxiliary agent leads to a relative decrease in the ratio of the activated carbon functioning as an active material to the polymer in the electrode and further causes a decrease of energy density of the power storage element.
The active material according to an embodiment of the present invention is capable of sufficiently forming a conductive path in the electrode by containing the conductive polymer in at least a part of the plurality of pores forming a three-dimensional network structure in the porous carbon having good electrical conductivity. Furthermore, the porous carbon itself has an ability to occlude or release ions and contributes to expression of capacity. Therefore, there is no

possibility that the energy density is lowered. Accordingly, a power storage element having high energy density and high output characteristics can be provided by using an electrode containing the active material according to an embodiment of the present invention.

Porous Carbon

The porous carbon used in the present embodiment has a plurality of pores forming a three-dimensional network structure.

The porous carbon having a plurality of pores forming a three-dimensional network structure refers to a state in which the porous carbon particle has multiple pores at the surface and inside with adjacent pores being three-dimensionally connected to each other to form a communicated pore opened at the surface of the porous carbon particle.

Whether or not the porous carbon has a plurality of pores forming a three-dimensional network structure can be determined by, for example, observing the porous carbon by a scanning electron microscope (SEM) or a transmission electron microscope (TEM).

A schematic cross-sectional view of the porous carbon having a plurality of pores forming a three-dimensional network structure is illustrated in FIG. 1 that is prepared based on a photograph obtained by TEM. In FIG. 1, reference numerals 101 and 100 respectively denote a pore and a carbon particle.

The porous carbon having a plurality of pores forming a three-dimensional network structure is advantageous in that, when incorporating the conductive polymer, the conductive polymer can be uniformly contained inside the porous carbon particle.

The structure of the porous carbon having a plurality of pores forming a three-dimensional network structure is described in detail below.

The porous carbon may have either micropores each having a minimum diameter less than 2 nm or mesopores each having a minimum diameter of 2 nm or more (preferably from 2 to 50 nm). Preferably, mesopores account for 25% or more of all the pores. Since mesopores are larger in pore size than micropores, when mesopores account for 25% or more of the pores forming the three-dimensional network structure, the conductive polymer can be easily incorporated therein in the process of containing the conductive polymer in the pores.

The ratio of mesopores can be calculated from an adsorption isotherm. The adsorption isotherm can be prepared by measuring the adsorption amount of gas molecules to a material kept at a constant temperature while changing the pressure by, for example, a Micromeritics Automatic Surface Area and Porosimetry Analyzer (TriStar II 3020 manufactured by Shimadzu Corporation).

In the adsorption isotherm, the adsorption amount of gas molecules at a relative pressure ($p/p_0$) of 0.3 or less is attributable to micropores, and the adsorption amount of gas molecules at a relative pressure ($p/p_0$) of from 0.3 to 0.96 is attributable to mesopores. Therefore, the ratio of mesopores can be calculated from the following formula 1.

[Formula 1]

Ratio of Mesopores (%) = ((Adsorption Amount of Gas Molecules at Relative Pressure of 0.96) - (Adsorption Amount of Gas Molecules at Relative Pressure of 0.3)) / (Adsorption Amount of Gas Molecules at Relative Pressure of 0.96) × 100

The direction of opening of the pores in the porous carbon is not limited and may be appropriately selected according to the purpose. Preferably, the pores are randomly opened in various directions.

The pores randomly opened in various directions refer to a state in which the porous carbon has no specific regulation or rule on the direction of containing the conductive polymer. If pores are formed with regularity in the porous carbon, it will be difficult to inject the conductive polymer from various angles.

As a method for determining the state of pores formed in the porous carbon, the following methods are known: a method in which gas molecules whose adsorption occupancy area is known are adsorbed to a surface of a sample and a specific surface area of the sample is determined from the adsorption amount of the gas molecules; and a BET (Brunauer, Emmett, and Teller) method in which a pore distribution is measured through condensation of gaseous molecules.

Preferably, the porous carbon has a BET specific surface area in the range of from 800 to 1,800 $m^2/g$, more preferably from 900 to 1,500 $m^2/g$. When the BET specific surface area is within the above-described preferred range, a sufficient amount of pores is formed and occlusion and release of anions are sufficiently performed, which is advantageous for increasing discharge capacity. On the other hand, when the BET specific surface area is too large, i.e., about

2,000 $m^2/g$ as is the case of activated carbon, the reaction with the electrolytic solution progresses so easily that decomposition of the electrolytic solution is accelerated through repeated charging and discharging, resulting in deterioration of discharge capacity in a long term.

When the BET specific surface area of the active material is within the above-described preferred range, the active material is less reactive with the electrolytic solution so that decomposition of the electrolytic solution is hardly accelerated, while a sufficient amount of pores is formed. Thus, deterioration of discharge capacity caused through repeated charging and discharging is suppressed.

The BET specific surface area can be determined from an adsorption isotherm obtained by, for example, an Automatic Surface Area and Porosimetry Analyzer (TriStar II 3020 available from Shimadzu Corporation) using the BET (Brunauer, Emmett, and Teller) method.

Preferably, the porous carbon has a bulk density in the range of from 0.1 to 1.0 g/cc, more preferably from 0.1 to 0.6 g/cc. When the bulk density is 0.1 g/cc or more, the thickness of the carbonaceous wall forming the pores is appropriate and a good pore structure is obtained. In addition, when the porous carbon is formed into an electrode, the electrode density is increased and the discharge capacity per unit volume is thereby increased.

On the other hand, when the bulk density exceeds 1.0 g/cc, mesopores are insufficiently formed and the abundance ratio of independent mesopores is increased, so that the occlusion amount of anions is decreased and a large discharge capacity is not obtained.

The bulk density can be measured by, for example, a Multi Powder Characteristic Analyzer (Multi Tester MT-1001K manufactured by Seishin Enterprise Co., Ltd.).

Preferably, the porous carbon has a pore volume in the range of from 0.2 to 2.3 mL/g, more preferably from 0.5 to 2.3 mL/g. When the pore volume is 0.2 mL/g or more, mesopores rarely become independent pores and therefore movement of anions is not inhibited. Thus, a large discharge capacity can be obtained. On the other hand, when the pore volume is 2.3 mL/g or less, the carbon structure does not become bulky so that the energy density of the electrode is increased, thereby increasing the discharge capacity per unit volume. In addition, the shape of the carbonaceous wall forming the pores can be maintained without being thinned even when occlusion and release of anions are repeated, which is advantageous in terms of long-term cyclability.

It is preferable that the carbonaceous wall has a layered structure portion. Preferably, the carbonaceous wall has an electric resistivity of 1.0 $\Omega \cdot cm$ or less, more preferably $1.0 \times 10^{-1}$ $\Omega \cdot cm$ or less. When the electric resistivity is 1.0 $\Omega \cdot cm$ or less, electrical conductivity is improved in the electrode, so that high output characteristics can be obtained. Although it is preferable that the electric resistivity is as small as possible, the electric resistivity is not necessarily required to be $1.0 \times 10^{-1}$ $\Omega \cdot cm$ or less. When the electric resistivity is 1.0 $\Omega \cdot cm$ or less, a conductive path is sufficiently formed in the electrode.

The electric resistivity can be measured by, for example, a powder resistivity measurement system (MCP-PD51 manufactured by Mitsubishi Chemical Analytech Co., Ltd.).

The pore volume of the porous carbon can be determined from an adsorption isotherm obtained by, for example, an Automatic Surface Area and Porosimetry Analyzer (TriStar II 3020 available from Shimadzu Corporation) using a BJH (Barrett, Joyner, and Hallender) method.

The median diameter of the porous carbon based on the volume-based particle size distribution is not particularly limited and may be appropriately selected according to the purpose, but is preferably in the range of from 1 to 20 $\mu m$, more preferably from 1 to 10 $\mu m$. When the median diameter of the porous carbon is within the above-described preferred range, the volume density of the electrode is suppressed from largely decreasing, which is advantageous.

The median diameter can be measured by, for example, a laser diffraction scattering type particle size distribution measurement method.

Preferably, the porous carbon has crystallinity.

It is not necessary that all of the carbonaceous matter in the porous carbon has a crystalline structure having crystallinity, and an amorphous structure having no crystallinity may be present in part. Alternatively, all of the carbonaceous matter may have an amorphous structure.

The state of having crystallinity refers to a state in which hexagonal plate-like monocrystal layers (graphite layers), in each of which carbons are bonded via $sp^2$ hybridized orbitals, are layered. Whether or not the porous carbon has crystallinity can be determined by, for example, observing the porous carbon by a transmission electron microscope (TEM) to confirm the layered structure of graphite or detecting X-ray diffraction spectrum peaks. Preferably, the presence of crystallinity is determined by confirming that the X-ray diffraction spectrum has at least one diffraction peak within a Bragg angle $2\theta$ range of from 25.00 to 27.00. More preferably, the presence of crystallinity is determined by confirming that the X-ray diffraction spectrum has two diffraction peaks within this Bragg angle $2\theta$ range.

Here, X-ray diffraction spectrum is described in detail below. An X-ray diffraction spectrum can be obtained from, for example, a measurement result by an X-ray diffractometer (XRD).

As X-rays enter a substance having a regular atomic arrangement, the X-rays are scattered by electrons that belong to the atoms, when the X-rays have a wavelength similar to the atomic spacing. The scattered X-rays interfere

with each other to strengthen themselves in a specific direction, thus causing a diffraction of the X-rays. Thus, the lattice spacing (i.e., the distance between lattices) of a crystal structure of a substance can be determined by measuring diffraction spectra while varying X-rays in wavelength. When a measurement target is amorphous, since the lattice spacing has no regularity, the resulting diffraction spectrum has a gently-sloped-mountain-like or flat shape all over the wavelength range. On the other hand, as to a crystalline portion, since the lattice spacing has regularity, the resulting diffraction spectrum has a peak (local maximum peak) at a specific wavelength corresponding to the lattice spacing. Such a local maximum peak observed in a diffraction spectrum is hereinafter referred to as "diffraction peak". Having a diffraction peak within the above-described Bragg angle 2θ range indicates that at least a part of the carbon particles in the porous carbon is crystallized. In other words, it indicates that a part of the carbon particles is graphitized.

Having two diffraction peaks indicates the presence of two types of crystal structures having different lattice spacings. In this case, preferably, a ratio ($I_l/I_h$) of a diffraction peak intensity ($I_l$) of the lower-angle diffraction peak to a diffraction peak intensity ($I_h$) of the higher-angle diffraction peak is greater than 1, i.e., $I_l/I_h > 1$ is satisfied. The larger proportion of the intensity ($I_l$) of the lower-angle diffraction peak indicates the larger distance (d) between carbon layers in the graphitized region. When the intensity ratio ($I_l/I_h$) is larger than 1, at the time when the cathode potential (vs. $Li/Li^+$) reaches the region of 4.0 V or higher, even when intercalation of anions to between the graphite layers of the porous carbon occurs, the carbon layer structure is not broken due to a large interlayer distance between the graphite layers, thus preventing the carbon particles from collapsing.

The shape of the porous carbon is not particularly limited and may be appropriately selected according to the purpose, but is preferably in the form of a particle or a block. It is easy for the porous carbon in the form of a particle or a block to form a close-packed structure when formed into an electrode, providing an increased electrode density and an increased discharge capacity per unit volume.

The porous carbon is not particularly limited and may be appropriately manufactured or a commercially-available product may be used.

Specific examples of the commercially-available product include, but are not limited to, CNovel® (registered trademark, available from Toyo Tanso Co., Ltd.).

The porous carbon can be produced by, for example, molding a reinforcing material having a three-dimensional network structure and a starting material that is an organic matter serving as a carbon material forming source, and burning these materials at 2,000°C or higher for carbonization. The organic matter is not particularly limited and may be appropriately selected according to the purpose. Examples thereof include, but are not limited to, polyimide, phenol resin, acrylic resin, and pitch-type thermosetting resin.

The reinforcing material is thereafter dissolved by an acid or a base, so that the traces of the reinforcing material are intentionally formed into multiple mesopores forming a three-dimensional network structure.

The reinforcing material is not particularly limited and may be appropriately selected according to the purpose. Examples thereof include, but are not limited to, acid-soluble or alkali-soluble metals, metal oxides, metal salts, and metal-containing organic matters.

The starting material is not particularly limited and may be appropriately selected according to the purpose so long as it can be carbonized.

The starting material is generally an organic matter. The organic matter releases volatile matters when carbonized, while forming micropores as the traces of the released volatile matters. Accordingly, it is generally difficult to produce carbon particles with no micropore.

Conductive Polymer

As the conductive polymer, a polymer capable of occluding or releasing cations or anions in a redox reaction is preferable.

The conductive polymer is not particularly limited and may be appropriately selected according to the purpose. Specific examples thereof include, but are not limited to, polythiophene and derivatives thereof, polyaniline and derivatives thereof, polypyrrole and derivatives thereof, polyacetylene and derivatives thereof, polycarbazole and derivatives thereof, polyvinyl pyridine and derivatives thereof, poly(n-vinylcarbazole) and derivatives thereof, polyfluorene and derivatives thereof, polyphenylene and derivatives thereof, poly(p-phenylenevinylene) and derivatives thereof, poly(pyridinevinylene) and derivatives thereof, polyquinoxaline and derivatives thereof, polyquinoline and derivatives thereof, polyoxadiazole derivatives, polybathophenanthroline derivatives, polytriazole derivatives, and these polymers substituted with a substituent such as amine group, hydroxyl group, nitrile group, and carbonyl group. Each of these materials can be used alone or in combination with others. Among these materials, polythiophene derivatives are preferred for having a high energy density.

Preferably, the polythiophene derivative is a polymer having a repeating unit represented by the following general formula (1).

The polythiophene derivative having a repeating unit represented by the general formula (1) is a stabilized

redox compound, and is a polymer that undergoes a redox reaction in at least one of a charging reaction and a discharging reaction.

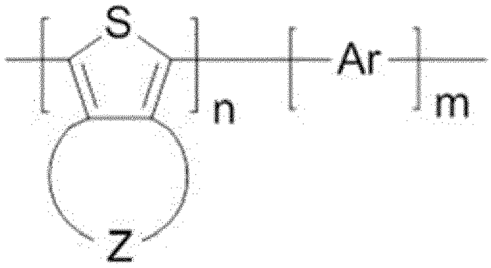

General Formula (1)

In the general formula (1), Z represents an atomic group forming a 5-membered to 9-membered heterocyclic ring comprising sulfur (S) atom, oxygen (O) atom, or selenium (Se) atom as a ring member. Since S atom, O atom, or Se atom, each of which being capable of taking a variety of oxidation numbers, is contained as a ring member, it is expected that electron transfer accompanying a redox reaction proceeds as a multi-electron reaction. As a result, an active material having a high capacity can be obtained. When a power storage element contains a polythiophene derivative as an active material, a high energy density can be obtained.

Ar represents an aromatic ring or an aromatic heterocyclic ring.

Examples of the aromatic ring include, but are not limited to, benzene, biphenyl, naphthalene, anthracene, fluorene, pyrene, and derivatives thereof.

Examples of the aromatic heterocyclic ring include, but are not limited to, pyridine, quinoline, thiophene, furan, oxazole, oxadiazole, carbazole, and derivatives thereof. Among them, thiophene and thiophene derivatives are preferable.

The aromatic ring or the aromatic heterocyclic ring may have a substituent such as an alkyl group, an alkoxy group, and a halogen atom.

Examples of the alkyl group include, but are not limited to, methyl group, ethyl group, isopropyl group, and butyl group.

Examples of the alkoxy group include, but are not limited to, methoxy group, ethoxy group, propoxy group, and butoxy group.

Examples of the halogen atom include, but are not limited to, fluorine atom, chlorine atom, bromine atom, and iodine atom.

Preferably, n is a natural number of 2 or more. More preferably, n is a natural number of from 10 to 100.

Preferably, m is zero or a natural number of 2 or more. More preferably, m is zero or a natural number of from 10 to 100.

Preferably, the polythiophene derivative having a repeating unit represented by the general formula (1) is a polythiophene derivative having a repeating unit represented by the following general formula (2).

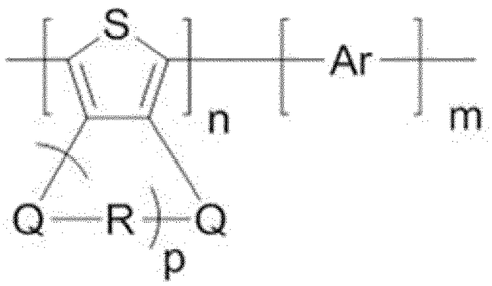

General Formula (2)

In the general formula (2), R represents a substituted or unsubstituted alkylene group or a substituted or unsubstituted branched alkylene group. p represents a natural number of 1 or more. Q represents S atom, O atom, or Se atom. Ar represents an aromatic ring or an aromatic heterocyclic ring, each of which may have a substituent. n represents a natural number of 2 or more, and m represents zero or a natural number or 2 or more.

R represents a substituted or unsubstituted alkylene group or a substituted or unsubstituted branched alkylene group. Examples of the substituent on the alkylene group include, but are not limited to, an alkyl group, an alkoxy group, an aryl group, an aryloxy group, a thioalkyl group, an arylthio group, an alkylamino group, an arylamino group, and a halogen atom.

Examples of the alkyl group include, but are not limited to, methyl group, ethyl group, isopropyl group, and butyl group.

Examples of the alkoxy group include, but are not limited to, those in which the alkyl moiety comprises the above alkyl group.

Examples of the aryl group include, but are not limited to, phenyl group, 4-tolyl group, 4-hydroxyphenyl group, 1-naphthyl group, and 2-naphthyl group.

Examples of the aryloxy group include, but are not limited to, those in which the aryl moiety comprises the above aryl group.

Examples of the thioalkyl group include, but are not limited to, methylthio group, ethylthio group, and butylthio group.

Examples of the arylthio group include, but are not limited to, phenylthio group.

Examples of the alkylamino group include, but are not limited to, diethylamino group, dimethylamino group, and hydroxyamino group.

Examples of the arylamino group include, but are not limited to, diphenylamino group and phenylnaphthylamino group.

Examples of the halogen atom include, but are not limited to, fluorine atom, chlorine atom, and bromine atom.

p is a natural number of 1 or more representing the number of repeating units. Preferably, p represents a natural number of from 1 to 3.

Ar, m, and n represent the same things as those defined in the general formula (1).

Preferably, the polythiophene derivative having a repeating unit represented by the general formula (1) is a polythiophene derivative having a repeating unit represented by the following general formula (3).

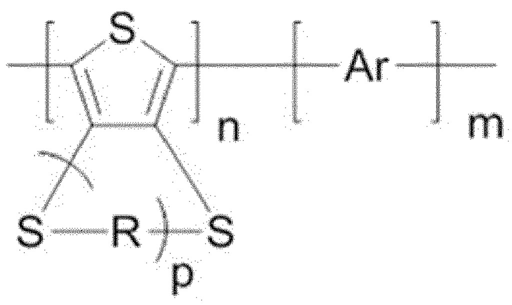

General Formula (3)

In the general formula (3), R represents a substituted or unsubstituted alkylene group or a substituted or unsubstituted branched alkylene group. p represents a natural number of 1 or more. Ar represents an aromatic ring or an aromatic heterocyclic ring, each of which may have a substituent. n represents a natural number of 2 or more, and m represents zero or a natural number or 2 or more.

Ar, m and n represent the same thing as those defined in the general formula (1), and R and p represent the same things as those defined in the general formula (2).

Specific examples of the polythiophene derivative having a repeating unit represented by the general formula (1) are presented below, but are not limited thereto. In the following formulas, n represents a natural number of 2 or more, and m represents zero or a natural number of 2 or more.

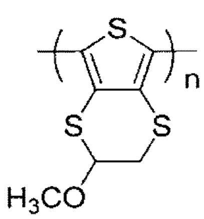

(1)

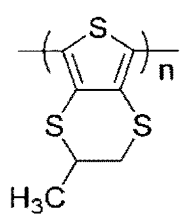

(2)

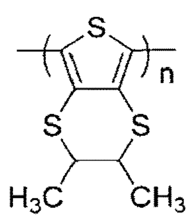

(3)

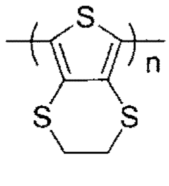

(4)

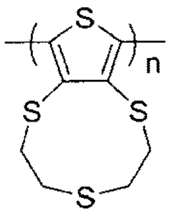

(5)

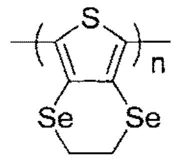

(6)

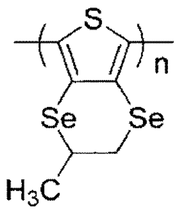

(7)

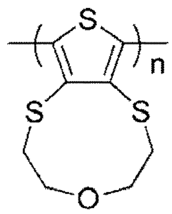

(8)

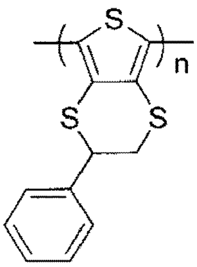

(9)

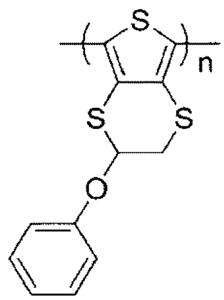

(10)

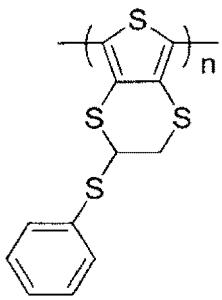

(11)

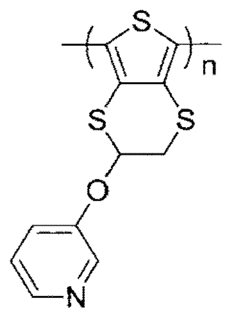

(12)

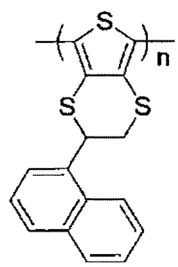

(13)

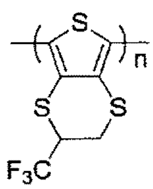

(14)

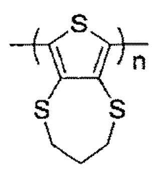

(15)

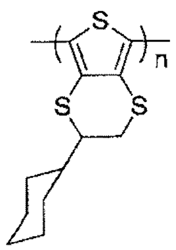

(16)

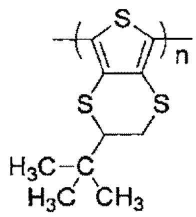

(17)

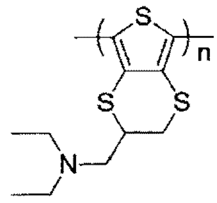

(18)

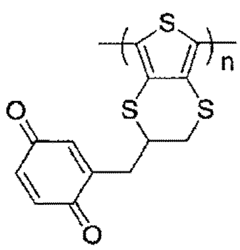

(19)

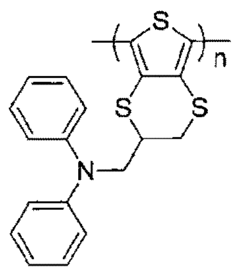

(20)

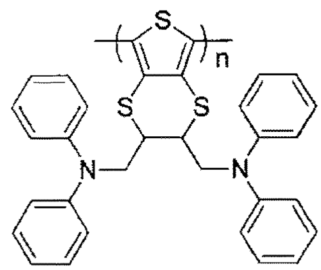

(21)

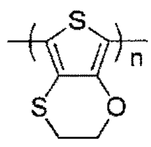

(22)

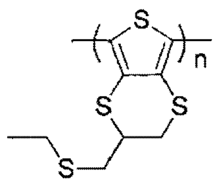

(23)

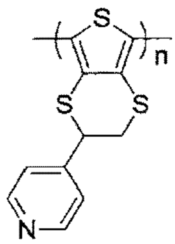

(24)

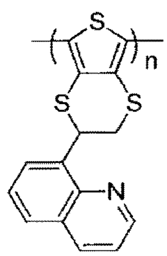

(25)

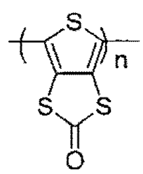

(26)

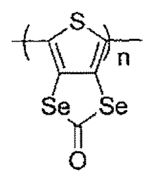

(27)

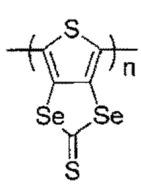

(28)

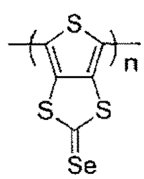

(29)

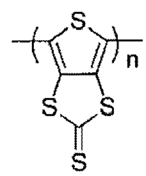

(30)

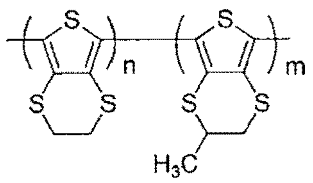

(31)

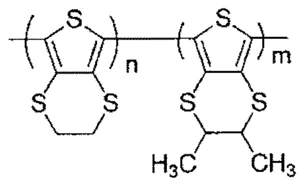

(32)

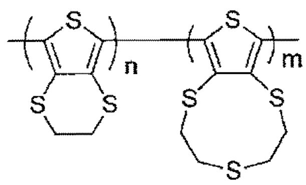

(33)

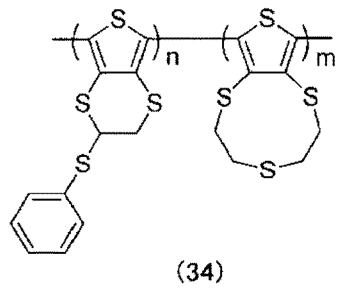

(34)

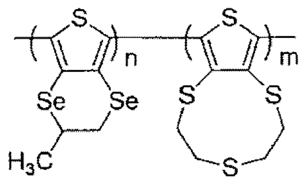

(35)

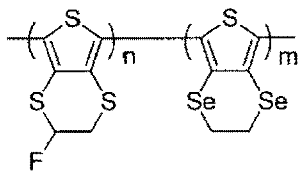

(36)

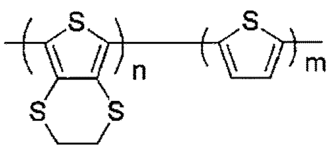

(37)

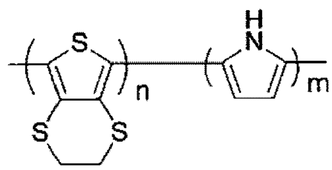

(38)

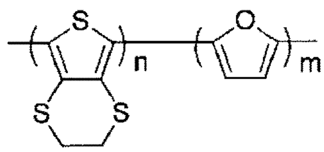

(39)

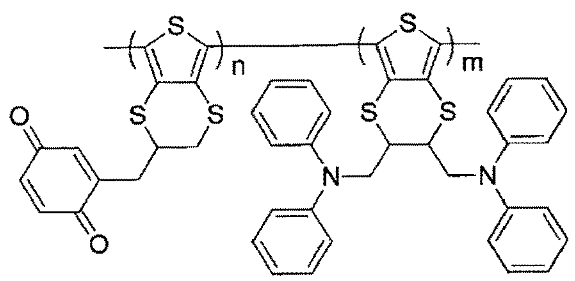

(40)

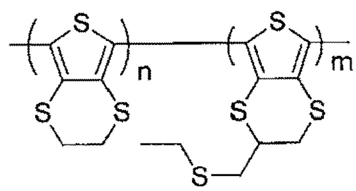

(41)

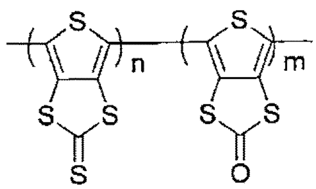

(42)

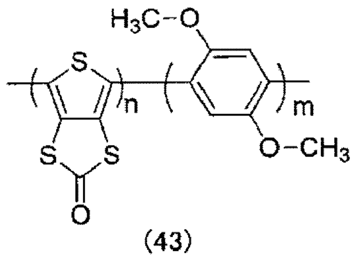

(43)

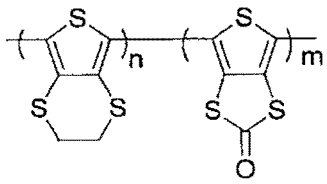

(44)

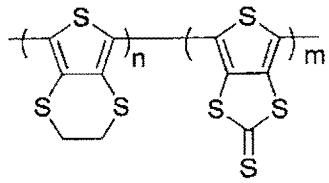

(45)

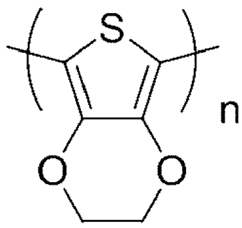

(62)

Among the above exemplary compounds as the polythiophene derivative, the compounds (2), (3), (4), (5), (8), (10), (11), (16), (26), (32), (36), and (44) are particularly preferable for their large discharge capacity and the ease of synthesis thereof.

Preferably, the polythiophene derivative is a polymer having a repeating unit represented by the following general formula (61).

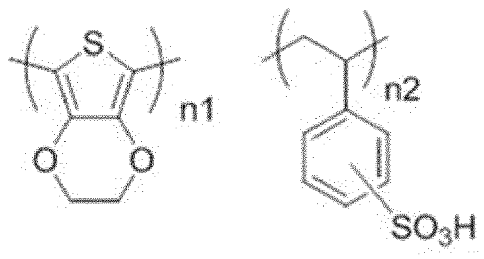

General Formula (61)

In the general formula (61), each of n1 and n2 independently represents a natural number of 2 or more. Preferably, n1 is a natural number of from 10 to 100 and n2 is a natural number of from 100 to 5,000.

Preferably, the conductive polymer is a polymer having a repeating unit comprising a structure represented by the following general formula (4).

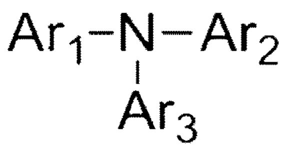

General Formula (4)

In the general formula (4), each of $Ar_1$, $Ar_2$, and $Ar_3$ independently represents an aromatic ring or an aromatic heterocyclic ring, each of which may have a substituent.

Examples of the aromatic ring include, but are not limited to, benzene, biphenyl, naphthalene, anthracene, fluorene, pyrene, and derivatives thereof.

Examples of the aromatic heterocyclic ring include, but are not limited to, pyridine, quinoline, thiophene, furan, oxazole, oxadiazole, carbazole, and derivatives thereof. Among them, thiophene and thiophene derivatives are preferable.

The aromatic ring or the aromatic heterocyclic ring may have a substituent such as an alkyl group, an alkoxy group, and a halogen atom.

Examples of the alkyl group include, but are not limited to, methyl group, ethyl group, isopropyl group, and butyl group.

Examples of the alkoxy group include, but are not limited to, methoxy group, ethoxy group, propoxy group, and butoxy group.

Examples of the halogen atom include, but are not limited to, fluorine atom, chlorine atom, bromine atom, and iodine atom.

Specific examples of the conductive polymer having a repeating unit comprising a structure represented by the general formula (4) are presented below, but are not limited thereto. In the following formulas, n represents a natural number of 2 or more.

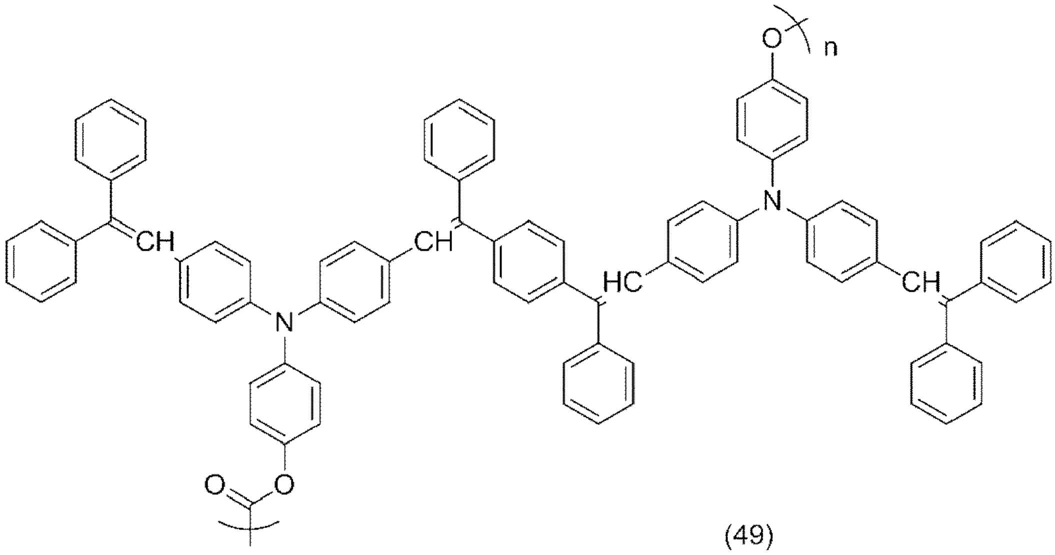

(49)

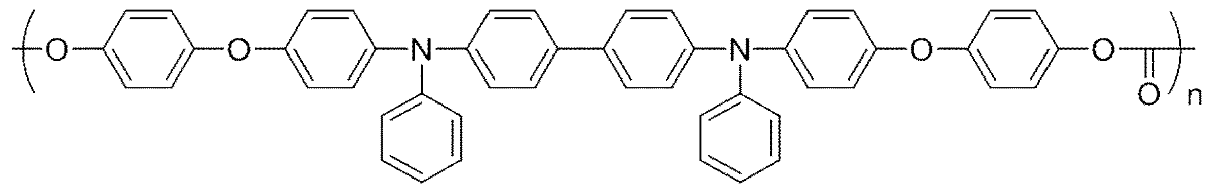

(50)

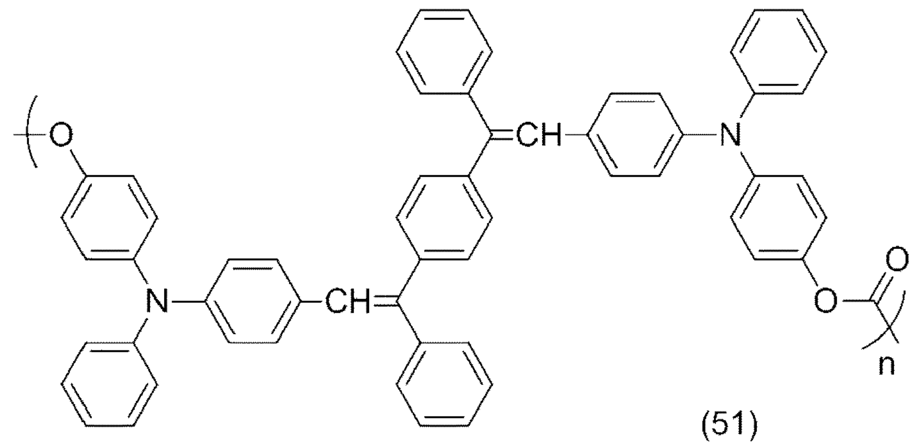

(51)

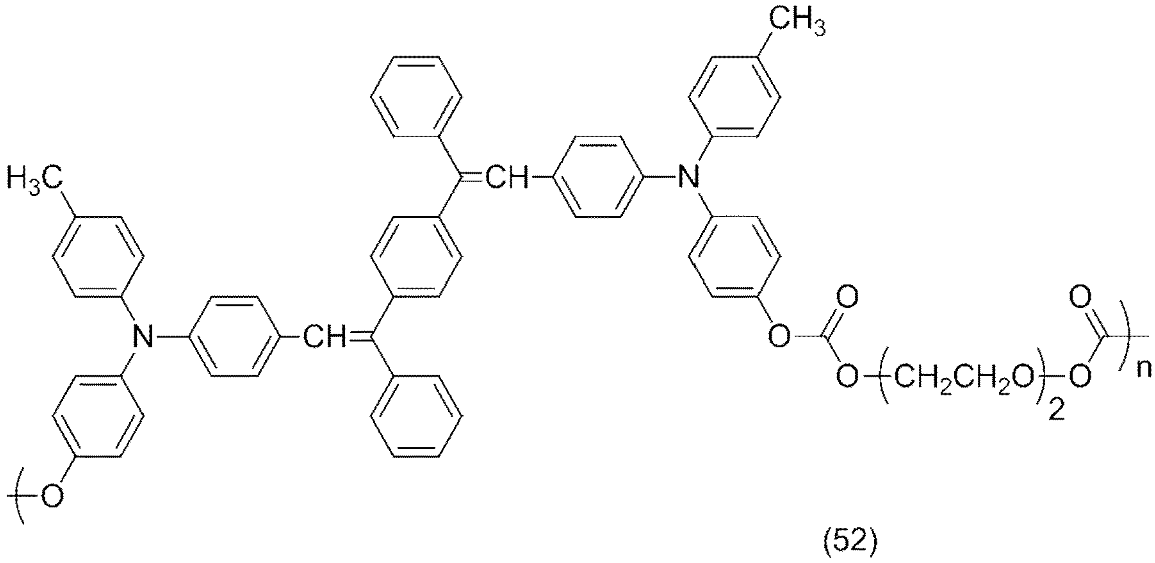

(52)

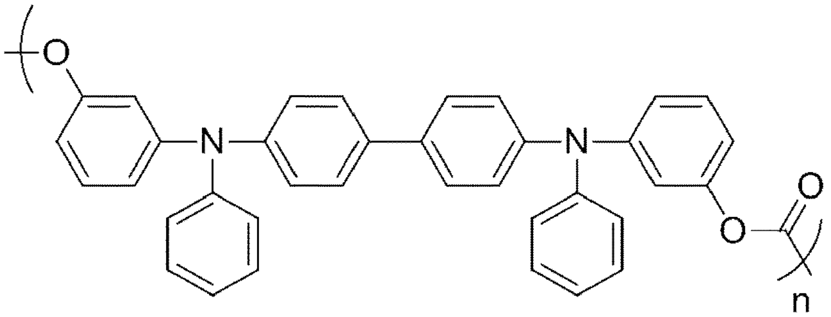

(53)

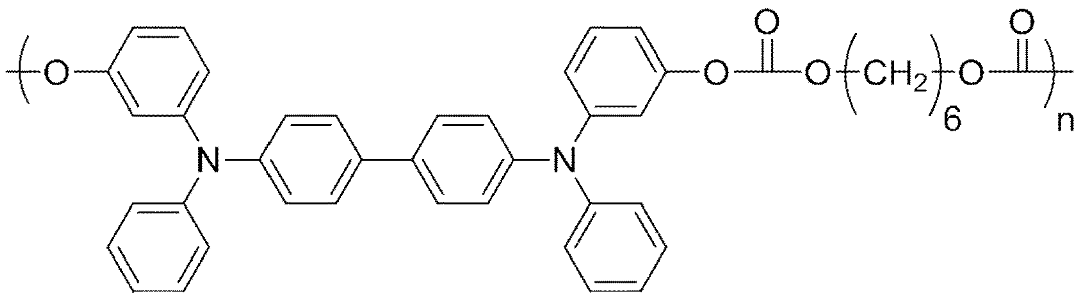

(54)

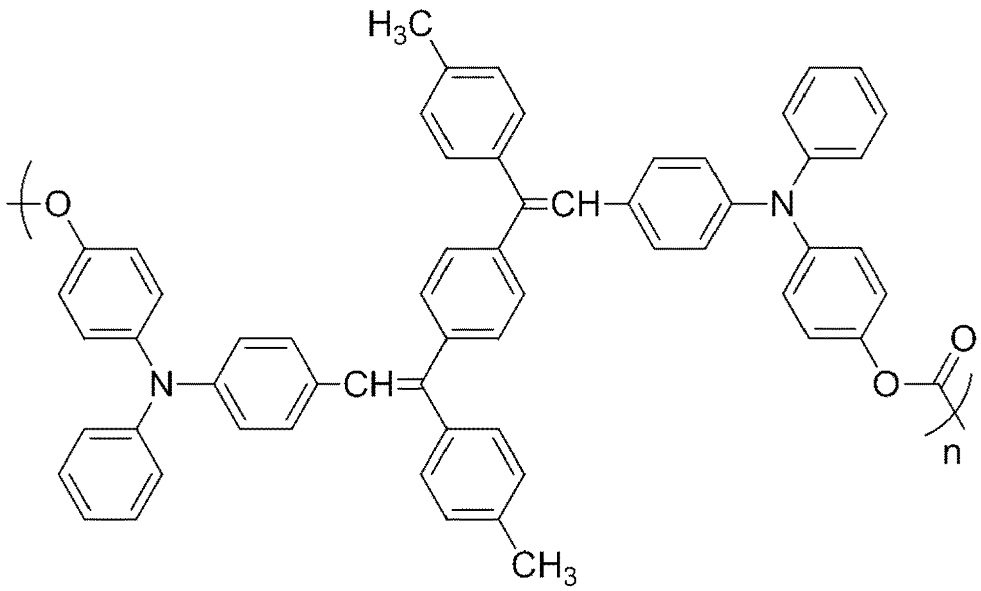

(55)

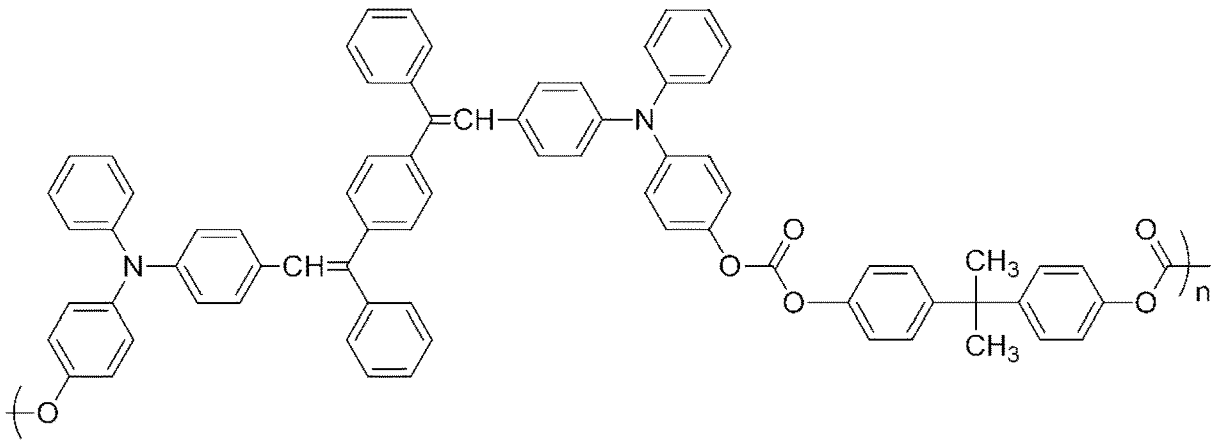

(56)

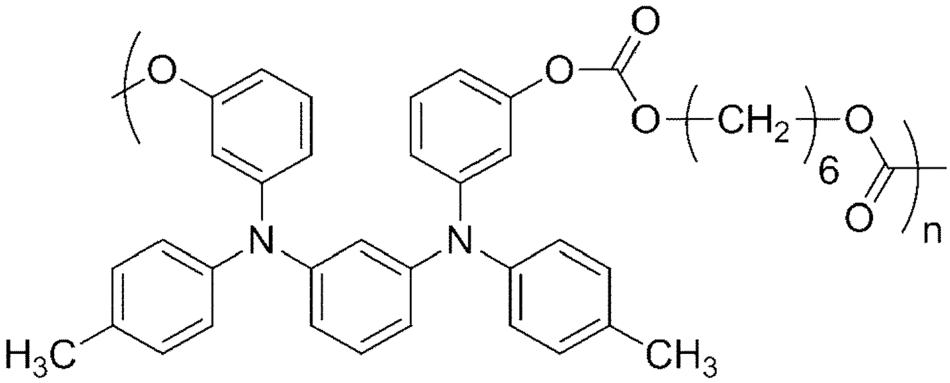

(57)

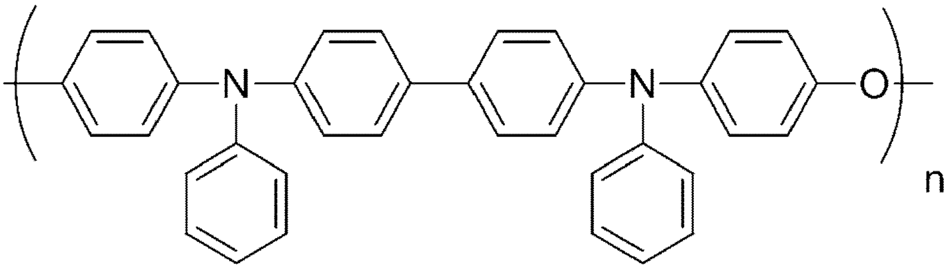

(58)

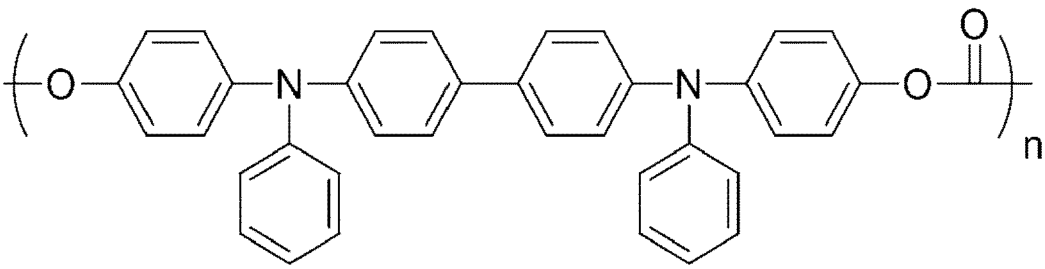

(59)

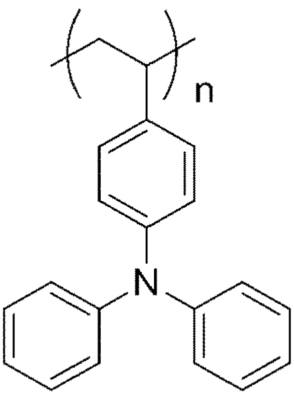

(65)

Preferably, the conductive polymer is a polymer having a repeating unit represented by the following general

formula (5).

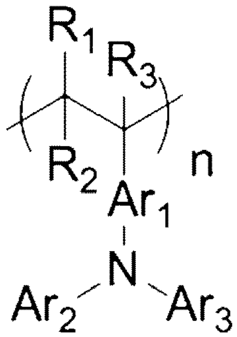

General Formula (5)

In the general formula (5), each of $R_1$, $R_2$, and $R_3$ independently represents a hydrogen atom, a substituted or unsubstituted alkyl group, or a substituted or unsubstituted branched alkyl group. Each of $Ar_1$, $Ar_2$, and $Ar_3$ independently represents an aromatic ring or an aromatic heterocyclic ring, each of which may have a substituent. n represents a natural number of 2 or more.

Examples of the alkyl group in $R_1$, $R_2$, and $R_3$ include, but are not limited to, methyl group, ethyl group, propyl group, and butyl group.

Examples of the branched alkyl group in $R_1$, $R_2$, and $R_3$ include, but are not limited to, isopropyl group, isobutyl group, sec-butyl group, and tert-butyl group.

Examples of the aromatic ring in $Ar_1$, $Ar_2$, and $Ar_3$ include, but are not limited to, benzene, biphenyl, naphthalene, anthracene, fluorene, pyrene, and derivatives thereof.

Examples of the aromatic heterocyclic ring in $Ar_1$, $Ar_2$, and $Ar_3$ include, but are not limited to, pyridine, quinoline, thiophene, furan, oxazole, oxadiazole, carbazole, and derivatives thereof. Among them, thiophene and thiophene derivatives are preferable.

Each of the alkyl group, the branched alkyl group, the aromatic ring, and the aromatic heterocyclic ring may have a substituent such as an alkyl group, an alkoxy group, and a halogen atom.

Examples of the alkyl group include, but are not limited to, methyl group, ethyl group, isopropyl group, and butyl group.

Examples of the alkoxy group include, but are not limited to, methoxy group, ethoxy group, propoxy group, and butoxy group.

Examples of the halogen atom include, but are not limited to, fluorine atom, chlorine atom, bromine atom, and iodine atom.

Preferably, n is a natural number of 2 or more. More preferably, n is a natural number of from 100 to 5,000.

Specific examples of the conductive polymer having a repeating unit represented by the general formula (5) are presented below, but are not limited thereto. In the following formula, n represents a natural number of 2 or more.

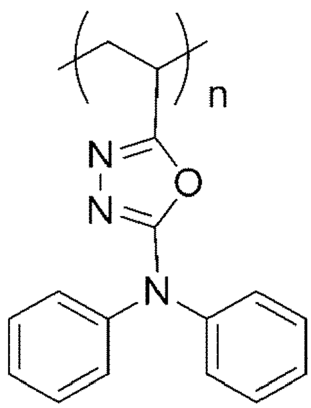

(60)

Preferably, the conductive polymer is a polymer having a repeating unit represented by the following general formula (63).

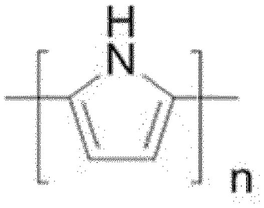

General Formula (63)

In the general formula (63), preferably, n is a natural number of 2 or more. More preferably, n is a natural number of from 100 to 5,000.

Preferably, the conductive polymer is a polymer having a repeating unit represented by the following general formula (65).

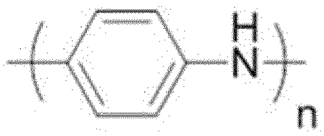

General Formula (65)

In the general formula (65), preferably, n is a natural number of 2 or more. More preferably, n is a natural number of from 100 to 5,000.

The polythiophene derivative having a repeating unit represented by the general formula (1) can be obtained by polymerizing a thiophene derivative represented by the following general formula (1A) or (1B) obtained by the respective reactions presented below.

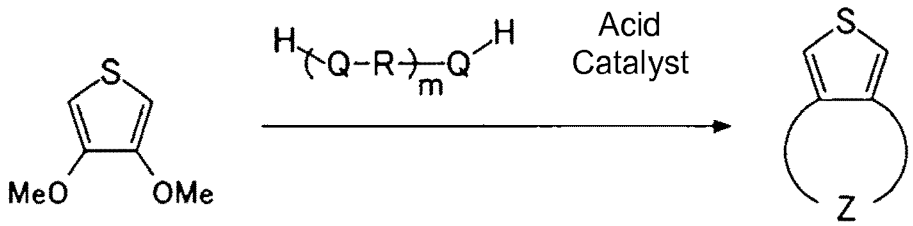


···· (1A)

In the general formula (1A), Me represents methyl group, Z represents an atomic group forming a 5-membered to 9-membered heterocyclic ring comprising S atom as a ring member.

The thiophene derivative represented by the general formula (1A) can be synthesized by the method described in Synthetic Communications 28 (12), 2237-2244 (1998). Specifically, the thiophene derivative can be obtained by a nucleophilic substitution reaction between an alkoxy-substituted thiophene, such as 3,4-dimethoxythiophene, and a chalcogen element source, such as a dithiol or a diol, using an acid catalyst.

Preferably, the reaction temperature is in the range of from 0°C to 150°C, more preferably from 50°C to 130°C.

Examples of the acid catalyst include, but are not limited to, acids (Bronsted acids) such as sulfuric acid, hydrochloric acid, phosphoric acid, methanesulfonic acid, trichloroacetic acid, trifluoroacetic acid, and p-toluenesulfonic acid.

Examples of the reaction solvent include, but are not limited to, toluene, xylene, anisole, tetralin, methylcyclohexane, ethylcyclohexane, chlorobenzene, and ortho-dichlorobenzene.

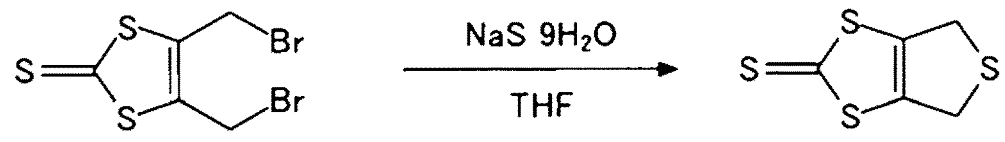


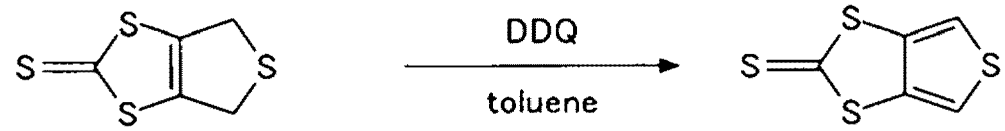

• • • • (1B)

The thiophene derivative represented by the general formula (1B) can be synthesized by the method described in Journal of Materials Chemistry 8 (8), 1719-1724 (1998). Specifically, the thiophene derivative can be obtained by cyclization of thione in dibromo form with sodium sulfide nonahydrate, followed by oxidation with 2,3-dichloro-5,6-dicyano-1,4-benzoquinone (DDQ).

Preferably, the reaction temperature in the cyclization is in the range of from 0°C to 100°C, more preferably from 10°C to 40°C.

Preferably, the reaction temperature in the oxidization is in the range of from 0°C to 150°C, more preferably from 80°C to 130°C.

The polymerization of the polythiophene derivative can be carried out by oxidative coupling polymerization using an oxidizing agent.

Examples of the oxidizing agent include, but are not limited to, iron (III) chloride and aromatic sulfonic acid metal salts.

Examples of the aromatic sulfonic acid metal salts include, but are not limited to, ferric o-toluenesulfonate, ferric m-toluenesulfonate, ferric p-toluenesulfonate, cupric o-toluenesulfonate, cupric m-toluenesulfonate, cupric p-toluenesulfonate, cobalt o-toluenesulfonate, cobalt m-toluenesulfonate, cobalt p-toluenesulfonate, manganese o-toluenesulfonate, manganese m-toluenesulfonate, manganese p-toluenesulfonate, ferric o-ethylbenzenesulfonate, ferric m-ethylbenzenesulfonate, ferric p-ethylbenzenesulfonate, ferric naphthalenesulfonate, and derivatives thereof. Each of these materials can be used alone or in combination with others.

Examples of solvents used in the polymerization include, but are not limited to, alcohol solvents, halogenated hydrocarbons, aromatic hydrocarbons, acetonitrile, and benzonitrile. Each of these materials can be used alone or in combination with others.

Examples of the alcohol solvents include, but are not limited to, methanol, ethanol, and butanol.

Examples of the halogenated hydrocarbons include, but are not limited to, chloroform, dichloromethane, and 1,2-dichloroethane.

Examples of the aromatic hydrocarbons include, but are not limited to, toluene, xylene, anisole, chlorobenzene, ortho-dichlorobenzene, and nitrobenzene.

Preferably, the polythiophene derivative as the conductive polymer has an oxidation potential of from 3 to 5 V, more preferably from 3 to 4.5 V, based on a lithium metal electrode (vs. $Li/Li^+$).

When the active material according to an embodiment of the present invention is used as a cathode active material of a power storage element, the porous carbon starts occluding anions at a potential of 3 V or more based on the lithium metal electrode (vs. $Li/Li^+$). Therefore, when the oxidation potential (vs. $Li/ Li^+$) of the polythiophene derivative is 3 V or more, the polythiophene derivative can be driven at the same operating voltage as that of the porous carbon, so that the capacity of both the porous carbon and the polythiophene derivative particles can be utilized. As a result, a larger capacity can be achieved as the active material.

When the oxidization potential (vs. $Li/Li^+$) of the polythiophene derivative is 5 V or more, it is impossible to utilize the capacity of the polythiophene derivative at that potential because a nonaqueous solvent in a nonaqueous electrolytic solution is oxidatively decomposed at a potential of 5 V or more based on the lithium metal electrode (vs. $Li/Li^+$). Therefore, it is preferable that the oxidation potential of the polythiophene derivative based on the lithium metal electrode (vs. $Li/Li^+$) is in the range of from 3 to 5 V. The oxidation potential can be measured by, for example, a method of cyclic voltammetry (CV).

The polythiophene derivative as the conductive polymer is contained in at least a part of the plurality of pores forming a three-dimensional network structure. Preferably, the polythiophene derivative is contained in most of the plurality of pores. More preferably, the polythiophene derivative is contained in all of the plurality of pores.

Since the resistance of the polythiophene derivative itself as the conductive polymer is high, electron transfer

accompanying oxidation and reduction of the polythiophene derivative is not performed smoothly unless a material with high electrical conductivity is interposed between the polythiophene derivative particles, causing a large capacity reduction. On the other hand, when the polythiophene derivative is contained in at least a part of the plurality of pores in the porous carbon having high electrical conductivity as described above, the electrical conductivity of the polythiophene derivative is compensated by the porous carbon. Therefore, electron transfer accompanying oxidation and reduction of the polythiophene derivative is smoothly performed, and the capacity of many polythiophene derivative particles contained in the active material is developed, thereby increasing the energy density.

Furthermore, since the plurality of pores is forming a three-dimensional network structure in the porous carbon, the polythiophene derivative particles can be contained even inside the porous carbon, so that more polythiophene derivative particles in the active material are effectively utilized, which is advantageous in that the energy density is further increased. In addition, since more polythiophene derivative particles can be contained in one porous carbon particle, the density of one active material particle is increased, which further contributes to an improvement in energy density.

Preferably, the mass ratio of the porous carbon to the conductive polymer is in the range of from 20/80 to 95/5, more preferably from 30/70 to 80/20. When the mass ratio of the porous carbon to the conductive polymer is in this range, energy density and output characteristics can be well balanced.

Method for Producing Active Material

The active material can be produced by applying a shearing force to the porous carbon and the conductive polymer by a particle composing apparatus under specific conditions.

Examples of the particle composing apparatus include, but are not limited to: NOBILTA (registered trademark) and MECHANO FUSION (registered trademark), manufactured by Hosokawa Micron Corporation; a paint shaker apparatus and MIRACLE KCK (registered trademark, knead-disperser), manufactured by Asada Iron Works Co., Ltd.; DRY STAR (registered trademark) and SIGMA DRY (registered trademark), manufactured by Ashizawa Finetech Ltd.; MIRALO (registered trademark) manufactured by Nara Machinery Co., Ltd.; and COMPOSI (registered trademark) manufactured by NIPPON COKE & ENGINEERING CO., LTD.

Whether or not the conductive polymer is contained in at least a part of the plurality of pores forming a three-dimensional network structure can be determined by, for example, observing the porous carbon by SEM, TEM, or energy dispersive X-ray spectrometry (EDS). A schematic cross-sectional view of the active material is illustrated in FIG. 2 that is prepared based on a photograph obtained by SEM and an element mapping image obtained by EDS. In FIG. 2, reference numerals 101 and 102 respectively denote a pore and the conductive polymer.

The active material according to an embodiment of the present invention contains the conductive polymer in at least a part of the plurality of pores of the porous carbon, so that the conductive polymer itself has good electrical conductivity. Since a large amount of conductive polymer particles in the active material are effectively utilized, the high capacity originally provided for the conductive polymer is effectively utilized. As a result, the active material can have a high energy density.

The active material according to an embodiment of the present invention can be used as either a cathode active material or an anode active material. Preferably, the active material is used as a cathode active material, so that a power storage element having both high energy density and high output characteristics can be provided.

As described below, the active material according to an embodiment of the present invention is suitably used as an electrode of a power storage element.

Electrode

An electrode according to an embodiment of the present invention contains the active material according to an embodiment of the present invention and further contains other members as necessary.

The electrode may be either a cathode or an anode. Preferably, the electrode is a cathode, so that a power storage element having both high energy density and high output characteristics can be provided.

Cathode

The cathode is a plate-like electrode unit containing a cathode current collector and cathode materials.

The cathode materials include a cathode active material, a binder, a conductive auxiliary agent, and a thickener, and further include other components as necessary.

Cathode Active Material

The active material according to an embodiment of the present invention is capable of occluding and releasing anions and is preferably used as the cathode active material. In the case of using any cathode active material other than the active material according to an embodiment of the present invention, carbonaceous materials are preferable for safety and cost.
Examples of the carbonaceous materials include, but are not limited to, graphite, pyrolysis products of organic matters produced under various pyrolysis conditions, and activated carbons.
Specific examples of the graphite include, but are not limited to, coke, synthetic graphite, natural graphite, easily-graphitizable carbon, and poorly-graphitizable carbon.
The cathode active material may include either one of the above materials alone or two or more of the above materials in combination. Further, a material other than the above, such as a lithium metal oxide, may be used in combination.
Examples of the lithium metal oxide include, but are not limited to, lithium cobalt oxide ($LiCoO_2$), lithium nickel oxide ($LiNiO_2$), lithium manganese oxide ($LiMn2O_4$), olivine-type lithium iron phosphate ($LiFePO_4$), and manganese-cobalt-nickel ternary oxide of lithium represented by a composition formula $Li_pNi_xCo_yMn_zO_2$ (e.g., $LiNi_{1/3}Co_{1/3}Mn_{1/3}O_2$).

Binder and Thickener

The binder binds the cathode active material particles to each other or binds the cathode active material and the cathode current collector to each other to maintain the structure of the electrode.
Preferred examples of the binder include, but are not limited to, fluorine-based binder, acrylate-based latex, and carboxymethyl cellulose (CMC).
Specific examples of the fluorine-based binder include, but are not limited to, polyvinylidene fluoride (PVDF) and polytetrafluoroethylene (PTFE).
Examples of the binder further include, but are not limited to, ethylene-propylene-butadiene rubber (EPBR), styrene-butadiene rubber (SBR), isoprene rubber, acrylate-based latex, carboxymethyl cellulose (CMC), methyl cellulose, hydroxymethyl cellulose, ethyl cellulose, polyacrylic acid, polyvinyl alcohol, alginic acid, oxidized starch, starch phosphate, and casein. Each of these materials can be used alone or in combination with others.
The binder is not particularly limited and appropriately selected according to the purpose, as long as it is stable against a solvent used at the time of preparing the electrode, an electrolytic solution, and an applied potential.

Conductive Auxiliary Agent

In the present disclosure, the conductive auxiliary agent refers to a conductive material used to reduce the resistance of the electrode by being dispersed in the electrode. The conductive auxiliary agent has a role of assisting conductivity between the electrode materials and a function of forming a conductive network.
Preferably, the conductive auxiliary agent is a metal material, or a carbonaceous material in accordance with the cathode active material. Each of these materials can be used alone or in combination with others.
Examples of the metal material used for the conductive auxiliary agent include, but are not limited to, copper and aluminum.
Examples of the carbonaceous material used for the conductive auxiliary agent include, but are not limited to, acetylene black, Ketjen black, synthetic graphite, natural graphite, graphene, carbon nanofiber, and carbon nanotube. Among these materials, acetylene black and Ketjen black are preferable.

Cathode Current Collector

The cathode current collector is not particularly limited and can be appropriately selected according to the purpose, as long as the size thereof is suitable for a power storage element.
The material of the cathode current collector is not particularly limited and can be appropriately selected according to the purpose, as long as it is formed of a conductive material and stable against the applied potential. Examples of such a material include, but are not limited to, nickel, aluminum, titanium, and tantalum. In particular, stainless steel and aluminum are preferable.
The type (e.g., shape, presence or absence of processing) of the cathode current collector is not particularly limited and can be appropriately selected according to the purpose, as long as it is durable in the process of preparing the cathode (to be described later). Examples of the cathode current collector include, but are not limited to, plain foils, perforated foils, edged foils, penetrating foils, protruding foils, and expanded metals. Of these, plain foils, perforated foils, edged foils, penetrating foils, and protruding foils are preferred.

In addition, a coating foil to which a carbonaceous material used for the conductive auxiliary agent is applied in advance may be used as the cathode current collector. In this case, the carbonaceous material used for the coating layer can be the same as the above-described carbonaceous material used for the conductive auxiliary agent. Of these, acetylene black, Ketjen black, synthetic graphite, and natural graphite are preferable.

Method for Preparing Cathode

The cathode may be prepared by: mixing the cathode active material with the binder, the thickener, the conductive auxiliary agent, a solvent, etc., to prepare a slurry cathode material; applying the slurry cathode material onto the cathode current collector; and drying the applied cathode material.
Examples of the solvent include, but are not limited to, water-based solvents such as water and alcohol, and organic solvents such as N-methyl-2-pyrrolidone (NMP) and toluene.
Alternatively, the cathode active material may be formed into a sheet electrode by roll forming or a pellet electrode by compression molding.

Anode

The anode is a plate-like electrode unit containing an anode current collector and anode materials.
The anode materials include an anode active material, a binder, a conductive auxiliary agent, and a thickener, and further include other components as necessary.

Anode Active Material

The active material according to an embodiment of the present invention can be used as the anode active material. In the case of using any anode active material other than the active material according to an embodiment of the present invention, carbonaceous materials are preferable for safety and cost.
Examples of the carbonaceous materials include, but are not limited to, graphite, pyrolysis products of organic matters produced under various pyrolysis conditions, and lithium metal oxides.
Specific examples of the graphite include, but are not limited to, coke, synthetic graphite, natural graphite, easily-graphitizable carbon, and poorly-graphitizable carbon.
The anode active material is not particularly limited and can be appropriately selected according to the purpose, as long as it can occlude and release cations in a nonaqueous solvent system.
Examples of a material used for the anode active material include, but are not limited to: carbonaceous materials capable of occluding and releasing lithium ion as a cation; metal oxides; metals or metal alloys capable of alloying with lithium; composite alloy compounds of lithium and an alloy containing lithium and a metal capable of alloying with lithium; and lithium metal nitride.
Examples of the metal oxides include, but are not limited to, antimony tin oxide and silicon monoxide.
Examples of the metals or metal alloys capable of alloying with lithium include, but are not limited to, lithium, aluminum, tin, silicon, and zinc.
Examples of the composite alloy compounds of lithium and an alloy containing lithium and a metal capable of alloying with lithium include, but are not limited to, lithium titanate.
Examples of the lithium metal nitride include, but are not limited to, lithium cobalt nitride.
Each of these materials for the anode active materials may be used alone or in combination with others. Of these, synthetic graphite, natural graphite, and lithium titanate are preferable.
As the cation, lithium ion is widely used.

Conductive Auxiliary Agent

As the conductive auxiliary agent used for the anode, the above-described conductive auxiliary agent used for the cathode can be used.

Binder and Thickener

As the binder and thickener used for the anode, the above-described binders and thickeners used for the cathode can be used.
Preferred examples of the binder and thickener include, but are not limited to, fluorine-based binder, styrene-butadiene rubber (SBR), and carboxymethyl cellulose (CMC).

Anode Current Collector

The anode current collector is not particularly limited and can be appropriately selected according to the purpose.
The material of the anode current collector is not particularly limited and can be appropriately selected according to the purpose, as long as it is formed of a conductive material and stable against the applied potential. Examples of such a material include, but are not limited to, stainless steel, nickel, aluminum, and copper. In particular, stainless steel, copper, and aluminum are preferable.
The shape of the anode current collector may be appropriately selected according to the purpose, and may be a flat-plate-like shape.
The anode current collector is not particularly limited and can be appropriately selected according to the purpose, as long as the size thereof is suitable for a power storage element.

Method for Preparing Anode

The anode may be prepared by: mixing the anode active material with the binder, the thickener, the conductive auxiliary agent, a solvent, etc., to prepare a slurry anode material; applying the slurry anode material onto the anode current collector; and drying the applied anode material.
Alternatively, the slurry anode material may be directly formed into a sheet electrode by roll forming or a pellet electrode by compression molding. Furthermore, the anode may be prepared by forming a thin film of the anode active material on the anode current collector by vapor deposition, sputtering, or plating.
As the solvent to be used in preparing the anode, the same solvent used in preparing the cathode can be used.

Power Storage Element

A power storage element according to an embodiment of the present invention contains a cathode, an anode, and an electrolytic solution. Preferably, the power storage element further contains a separator disposed between the cathode and the anode and configured to hold the electrolytic solution. The power storage element further contains other members as necessary.
At least one of the cathode and the anode is the electrode according to an embodiment of the present invention.

Electrolytic Solution

Preferably, the electrolytic solution is a nonaqueous electrolytic solution in which an electrolyte salt is dissolved in a nonaqueous solvent.

Nonaqueous Solvent

Specific examples of the nonaqueous solvent include, but are not limited to, aprotic organic solvents, ester-based organic solvents, and ether-based organic solvents. Each of these materials can be used alone or in combination with others. In particular, aprotic organic solvents are preferable.
Specific examples of the aprotic organic solvents include, but are not limited to, carbonate-based organic solvents. In particular, those having a low viscosity are preferable.
Specific examples of the carbonate-based organic solvents include, but are not limited to, chain-like carbonates and cyclic carbonates. Each of these materials can be used alone or in combination with others.
In particular, chain-like carbonates are preferable for their high electrolyte-salt-dissolving power.
Specific examples of the chain-like carbonates include, but are not limited to, dimethyl carbonate (DMC), diethyl carbonate (DEC), and methyl ethyl carbonate (EMC). Each of these materials can be used alone or in combination with others. Among these materials, dimethyl carbonate (DMC) and methyl ethyl carbonate (EMC) are preferable.
In the case of using dimethyl carbonate (DMC) and methyl ethyl carbonate (EMC) in combination as a mixed solvent, the mixing ratio between dimethyl carbonate (DMC) and methyl ethyl carbonate (EMC) is not particularly limited and can be selected according to the purpose.
Specific examples of the cyclic carbonates include, but are not limited to, propylene carbonate (PC), ethylene carbonate (EC), butylene carbonate (BC), vinylene carbonate (VC), and fluoroethylene carbonate (FEC). Each of these materials can be used alone or in combination with others. Among these materials, propylene carbonate (PC) and ethylene carbonate (EC) are preferable.
In the case of using ethylene carbonate (EC) as the cyclic carbonate and dimethyl carbonate (DMC) as the chain-like carbonate in combination as a mixed solvent, the mixing ratio between ethylene carbonate (EC) and dimethyl carbonate (DMC) is not particularly limited and can be selected according to the purpose.

Specific examples of the ester-based organic solvents include, but are not limited to, cyclic esters and chain-like esters. Specific examples of the cyclic esters include, but are not limited to, γ-butyrolactone (γ-BL), 2-methyl-γ-butyrolactone, acetyl-γ-butyrolactone, and γ-valerolactone.

Specific examples of the chain-like esters include, but are not limited to, propionic acid alkyl esters, malonic acid dialkyl esters, acetic acid alkyl esters, and formic acid alkyl esters.

Specific examples of the acetic acid alkyl esters include, but are not limited to, methyl acetate (MA) and ethyl acetate.

Specific examples of the formic acid alkyl esters include, but are not limited to, methyl formate (MF) and ethyl formate.

Specific examples of ether-based organic solvents include, but are not limited to, cyclic ethers and chain-like ethers.

Specific examples of the cyclic ethers include, but are not limited to, tetrahydrofuran, alkyltetrahydrofuran, alkoxytetrahydrofuran, dialkoxytetrahydrofuran, 1,3-dioxolan, alkyl-1,3-dioxolan, and 1,4-dioxolan.

Specific examples of the chain-like ethers include, but are not limited to, 1,2-dimethoxyethane (DME), diethyl ether, ethylene glycol dialkyl ether, diethylene glycol dialkyl ether, triethylene glycol dialkyl ether, and tetraethylene glycol dialkyl ether.

Electrolyte Salt

Preferably, the electrolyte salt used for the nonaqueous electrolytic solution is a lithium salt.

The lithium salt is not particularly limited and can be appropriately selected according to the purpose, as long as it can be dissolved in a nonaqueous solvent and exhibits high ionic conductivity. Examples of the lithium salt include, but are not limited to, lithium hexafluorophosphate ($LiPF_6$), lithium perchlorate ($LiClO_4$), lithium chloride (LiCl), lithium tetrafluoroborate ($LiBF_4$), lithium hexafluoroarsenate ($LiAsF_6$), lithium trifluoromethasulfonate ($LiCF_3SO_3$), lithium bistrifluoromethylsulfonylimide ($LiN(C_2F_5SO_2)_2$), and lithium bisperfluoroethylsulfonylimide ($LiN(CF_2F_5SO_2)_2$). Each of these materials can be used alone or in combination with others. Of these, $LiPF_6$ and $LiBF_4$ are preferable for increasing the occlusion amount of anions to the electrode.

The concentration of the electrolyte salt is not particularly limited and may be appropriately selected according to the purpose. For satisfying both discharge capacity and output, the concentration of the electrolyte salt in a nonaqueous solvent is preferably from 0.5 to 6 mol/L, more preferably from 1 to 4 mol/L.

Separator

The separator is provided between the cathode and the anode to prevent a short circuit between the cathode and the anode.

The material, shape, size, and structure of the separator are not particularly limited and may be appropriately selected according to the purpose.

Examples of the material of the separator include, but are not limited to, paper (e.g., Kraft paper, vinylon mixed paper, synthetic pulp mixed paper), cellophane, polyethylene grafted film, polyolefin unwoven fabric (e.g., polypropylene melt-blown unwoven fabric), polyamide unwoven fabric, glass fiber unwoven fabric, and micropore film. In particular, those having a porosity of 50% or more are preferable for retaining the electrolytic solution.

Preferably, the separator is in an unwoven-fabric-like shape having a high porosity rather than a thin-film-like shape having micropores.

Preferably, the average thickness of the separator is 20 μm or more for preventing short circuit and retaining the electrolytic solution.

The size of the separator is not particularly limited and can be appropriately selected according to the purpose, as long as the separator can be used for a power storage element with a nonaqueous electrolytic solution.

The separator may have either a single layer structure or a stacked layer structure in which a plurality of separators is stacked.

Method for Producing Power Storage Element

The method for producing the power storage element is not particularly limited and can be appropriately selected according to the purpose. For example, the method may include assembling the cathode, the anode, the separator, and other constituent members into an appropriate shape, putting them in a container, and filling the container with the electrolytic solution.

The shape of the power storage element according to an embodiment of the present invention is not particularly limited. In addition to the shape illustrated in FIG. 3, the shape may be appropriately selected from various generally

adopted shapes.

For example, the power storage element may be in a cylindrical shape in which a sheet electrode and a separator are assembled in a spiral manner, another cylindrical shape in which a pellet electrode and a separator are combined into an inside-out structure, or a coin-like shape in which a pellet electrode and a separator are laminated.

As illustrated in FIG. 3, a power storage element 10 according to an embodiment of the present invention contains a cathode 1, an anode 2 disposed so as to face the cathode 1, a separator 3 disposed between the cathode 1 and the anode 2, and a nonaqueous electrolytic solution.

The power storage element 10 further contains: a container 5 serving as an outer canister for surrounding and holding the cathode 1, the anode 2, the separator 3, and the nonaqueous electrolytic solution; a cathode wire 6 penetrating the container 5 and connected to the cathode 1; and an anode wire 7 penetrating the container 5 and connected to the anode 2. The nonaqueous electrolytic solution is being spread throughout the container 5. The power storage element 10 may be a secondary battery as illustrated in FIG. 3, or alternatively, a capacitor.

## Use Application

The power storage element according to an embodiment of the present invention can be suitably used as, for example, a nonaqueous electrolyte secondary battery or a nonaqueous electrolyte capacitor.

The power storage element is not particularly limited in application and can be used for various purposes. For example, the power storage element may be used for power sources and backup power sources for laptop computers, pen input personal computers, mobile personal computers, electronic book players, cellular phones, portable facsimile machines, portable copiers, portable printers, headphone stereos, video movie recorders, liquid crystal display televisions, handy cleaners, portable CD players, mini disk players, transceivers, electronic organizers, calculators, memory cards, portable tape recorders, radios, motors, illumination apparatuses, toys, game machines, clocks, electronic flashes, and cameras.

## EXAMPLES

Further understanding can be obtained by reference to certain specific examples which are provided herein for the purpose of illustration only and are not intended to be limiting.

The following evaluations were conducted to confirm the state of formation of pores in the carbonaceous material used as the cathode active material in each Example and Comparative Example.

### State of Formation of Pores in Porous Carbon

Each carbonaceous material used as the cathode active material in each Example and Comparative Example was observed with a TEM (JEM-2100 available from JEOL Ltd.) to determine whether pores forming a three-dimensional network structure were present or not. The state of formation of pores was evaluated based on the following criteria. The results are presented in Tables 1-1 to 5-2.

### Evaluation Criteria

Yes: Pores 101 forming a three-dimensional network structure as illustrated in FIG. 1 were observed.

No: Pores 101 forming a three-dimensional network structure as illustrated in FIG. 1 were not observed.

### State of Formation of Composite Active Material

Each active material used as the cathode active material in each Example and Comparative Example was observed with a SEM equipped EDS (SU8230 available from Hitachi High-Technologies Corporation) to obtain an element mapping image. Whether or not the composite active material containing the conductive polymer inside the pores of the porous carbon was present was determined based on the following criteria. The results are presented in Tables 1-1 to 5-2.

### Evaluation Criteria

Yes: Presence of conductive polymer 102 contained inside pores 101 forming a three-dimensional network structure, as illustrated in FIG. 2, was confirmed.

No: Presence of conductive polymer 102 contained inside pores 101 forming a three-dimensional network structure, as illustrated in FIG. 2, was not confirmed.

Example 1

Preparation of Active Material

As a conductive polymer, the compound (2) having the following formula as a polythiophene derivative was prepared. As a carbonaceous material, a porous carbon A (CNovel®, registered trademark, manufactured by Toyo Tanso Co., Ltd.) having a plurality of pores forming a three-dimensional network structure was prepared. A TEM image of a cross section of the porous carbon A particle is presented in FIG. 4. The BET specific surface area, the pore volume, and the average diameter of the pores of the porous carbon A particles were 1,000 $m^2/g$, 0.6 mL/g, and 3 nm, respectively.

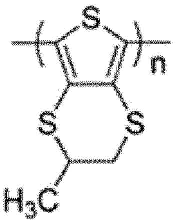

(2)

In the above formula, n represents a natural number of 2 or more.

Next, the porous carbon A and the compound (2) were mixed at a mass ratio of 70/30, and a vial containing zirconia beads was filled with the mixture. The vial was set in a paint shaker (manufactured by Asada Iron Works Co., Ltd.) and subjected to a shaking treatment for 4 hours. After this treatment, the resulting active material was collected, thus obtaining a particulate active material. The obtained particulate active material was designated as a cathode active material A.

Preparation of Cathode

Preparation of Cathode Slurry

The cathode active material A serving as a cathode active material, an acrylate-based latex (TRD202A available from JSR Corporation) serving as a binder, and a carboxymethyl cellulose (CMC DAICEL 2200 available from Daicel FineChem Ltd.) serving as a thickener, with the mass ratio thereof being 100:3:5 based on solid contents, were mixed by a planetary mixer (HIVIS DISPER MIX Model 3D-2 available from PRIMIX Corporation). The resulting mixture was further mixed with water to have an appropriate viscosity. Thus, a cathode material being a cathode slurry was prepared.

Preparation of Cathode

The above-prepared cathode material was applied onto one surface of a plain aluminum foil having an average thickness of 20 μm, serving as a cathode collector, with a doctor blade. The average mass of the cathode active material A in the applied cathode slurry after being dried was adjusted to 3.0 $mg/cm^2$. The foil having the dried cathode slurry thereon was punched into a circle having a diameter of 16 mm, thus preparing a cathode. A SEM image of a cross section of the cathode is presented in FIG. 5. Element mapping images of the cross section of the cathode obtained by EDS are presented in FIGs. 6 and 7. FIG. 6 is a carbon (C) element mapping image and FIG. 7 is a sulfur (S) element mapping image, each of which illustrates a dispersion state of respective elements in the cathode.

Separator

As separators, two pieces of a cellulose unwoven fabric separator (having an average thickness of 40 μm) punched into a circle having a diameter of 16 mm were prepared.

Anode

As an anode, a lithium metal foil (having an average thickness of 100 μm) punched into a circle having a diameter of 16 mm was used.

Nonaqueous Electrolytic Solution

As a nonaqueous electrolytic solution, a mixture of ethylene carbonate (EC) and dimethyl carbonate (DMC) with a mass ratio being 1:2 (available from Kishida Chemical Co., Ltd.) containing 1.0 mol/L of an electrolyte $LiPF_6$ in was used.

Preparation of Nonaqueous Electrolyte Power Storage Element

The anode, the cathode, and the separator were vacuum-dried at 150°C for 4 hours and thereafter assembled into a 2032-type coin cell as a power storage element in a glove box filled with dry argon atmosphere.
Further, 50 μL of the nonaqueous electrolytic solution was injected into the 2032-type coin cell. Thus, a nonaqueous electrolyte power storage element of Example 1 was prepared.
The nonaqueous electrolyte power storage element obtained in Example 1 was subjected to the following charge-discharge test. The results are presented in Table 1-1.

Charge-Discharge Test

The nonaqueous electrolyte power storage element obtained in Example 1 was held in a thermostatic chamber having a temperature of 25°C and subjected to a charge-discharge test using an automatic battery evaluation device (1024B-7V 0.1A-4 available from Electro Field Co., Ltd.) as described below.
The initial charge-discharge was performed as an aging treatment in which a constant current charge was performed up to a charge cut-off voltage of 4.4 V with a current value converted at a charge-discharge rate of 0.2 C.
The charge was thereafter stopped for 24 hours and then a constant current discharge was performed up to a discharge cut-off voltage of 1.7 V with a current value converted at a charge-discharge rate of 1 C.
The current value converted at a charge-discharge rate of 0.2 C refers to a current value which causes a nonaqueous electrolyte power storage element having a capacity equal to the nominal capacity value to complete a constant current discharge in 5 hours. The current value converted at a charge-discharge rate of 1 C refers to a current value which causes a nonaqueous electrolyte power storage element having a capacity equal to the nominal capacity value to complete a constant current discharge in 1 hour.
After the aging treatment, charge and discharge were performed in the following steps.

[1]: Constant current charge up to 4.4 V with a current value converted at a charge-discharge rate of 0.2 C.
[2]: Stop for 5 minutes.
[3]: Constant current discharge up to 1.7 V with a current value converted at a charge-discharge rate of 0.2 C.
[4]: Stop for 5 minutes.
[5]: Constant current charge up to 4.4 V with a current value converted at a charge-discharge rate of 10 C.
[6]: Stop for 5 minutes.
[7]: Constant current discharge up to 1.7 V with a current value converted at a charge-discharge rate of 10 C.
[8]: Stop for 5 minutes.

During the above charge-discharge test, the discharge capacity in the step [3] and the discharge capacity in the step [7] were measured. The discharge curve obtained with a current value converted at a charge-discharge rate of 0.2 C (hereinafter "0.2-C discharge") and the discharge curve obtained with a current value converted at a charge-discharge rate of 10 C (hereinafter "10-C discharge") in Example 1 are presented in FIG. 8.
The discharge capacity is a converted value (mAh/g) per 1 g of the cathode active material A. Also, the energy density (Wh/L) per unit volume of the nonaqueous electrolyte power storage element was calculated from the following formula 2.

[Formula 2]

Energy Density per Unit Volume (Wh/L) = ((Discharge Capacity at 0.2-C Discharge) × (Weight of Cathode Active Material) × (Average Voltage at 0.2-C Discharge)) / (Total Volume of Cathode, Anode, and Separator)

Next, to evaluate output characteristics, the capacity ratio of the discharge capacity at 10-C discharge to the discharge capacity at 0.2-C discharge was obtained from the following formula 3. When the capacity ratio is close to

100%, it indicates that the element has good electrical conductivity responsive to a high charge-discharge rate (hereinafter "C rate") and therefore output characteristic is high.

[Formula 3]

$$\text{Capacity Ratio (\%)} = (\text{Discharge Capacity at 10-C Discharge}) / (\text{Discharge Capacity at 0.2-C Discharge}) \times 100$$

Next, high energy density property and high output characteristic were evaluated based on the following evaluation criteria. The results are presented in Table 1-1.

High Energy Density Property

Evaluation Criteria for High Energy Density Property

A: The energy density per unit volume was 31 Wh/L or more.
B: The energy density per unit volume was 29 Wh/L or more and less than 31 Wh/L.
C: The energy density per unit volume was less than 29 Wh/L.

High Output Characteristics

Evaluation Criteria for High Output Characteristics

A: The capacity ratio of the discharge capacity at 10-C discharge to the discharge capacity at 0.2-C discharge was 60% or more.
B: The capacity ratio of the discharge capacity at 10-C discharge to the discharge capacity at 0.2-C discharge was 50% or more and less than 60%.
C: The capacity ratio of the discharge capacity at 10-C discharge to the discharge capacity at 0.2-C discharge was less than 50%.

Example 2

A nonaqueous electrolyte power storage element of Example 2 was prepared and evaluated in the same manner as in Example 1 except that the compound (2) serving as a conductive polymer was replaced with the compound (3) having the following formula. The results are presented in Table 1-1.

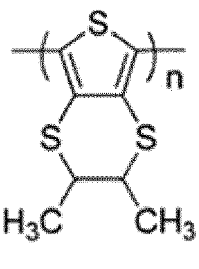

(3)

In the above formula, n represents a natural number of 2 or more.

Example 3

A nonaqueous electrolyte power storage element of Example 3 was prepared and evaluated in the same manner

as in Example 1 except that the compound (2) serving as a conductive polymer was replaced with the compound (4) having the following formula. The results are presented in Table 1-1.

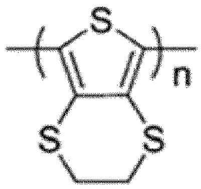

(4)

In the above formula, n represents a natural number of 2 or more.

Example 4

A nonaqueous electrolyte power storage element of Example 4 was prepared and evaluated in the same manner as in Example 1 except that the compound (2) serving as a conductive polymer was replaced with the compound (5) having the following formula. The results are presented in Table 1-1.

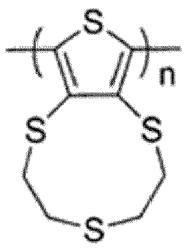

(5)

In the above formula, n represents a natural number of 2 or more.

Example 5

A nonaqueous electrolyte power storage element of Example 5 was prepared and evaluated in the same manner as in Example 1 except that the compound (2) serving as a conductive polymer was replaced with the compound (8) having the following formula. The results are presented in Table 1-1.

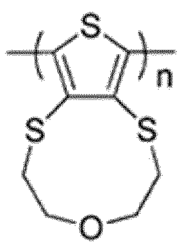

(8)

In the above formula, n represents a natural number of 2 or more.

Example 6

A nonaqueous electrolyte power storage element of Example 6 was prepared and evaluated in the same manner

as in Example 1 except that the compound (2) serving as a conductive polymer was replaced with the compound (10) having the following formula. The results are presented in Table 1-2.

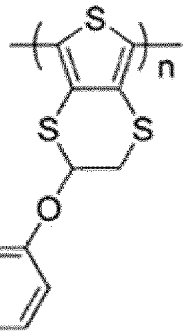

(10)

In the above formula, n represents a natural number of 2 or more.

Example 7

A nonaqueous electrolyte power storage element of Example 7 was prepared and evaluated in the same manner as in Example 1 except that the compound (2) serving as a conductive polymer was replaced with the compound (11) having the following formula. The results are presented in Table 1-2.

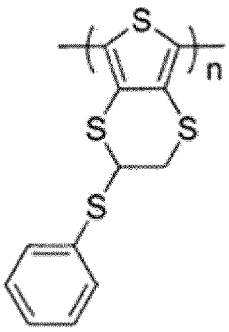

(11)

In the above formula, n represents a natural number of 2 or more.

Example 8

A nonaqueous electrolyte power storage element of Example 8 was prepared and evaluated in the same manner as in Example 1 except that the compound (2) serving as a conductive polymer was replaced with the compound (16) having the following formula. The results are presented in Table 1-2.

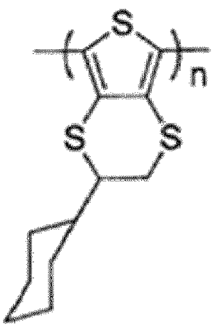

(16)

In the above formula, n represents a natural number of 2 or more.

Example 9

A nonaqueous electrolyte power storage element of Example 9 was prepared and evaluated in the same manner as in Example 1 except that the compound (2) serving as a conductive polymer was replaced with the compound (26) having the following formula. The results are presented in Table 1-2.

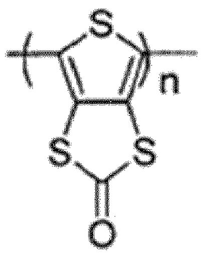

(26)

In the above formula, n represents a natural number of 2 or more.

Example 10

A nonaqueous electrolyte power storage element of Example 10 was prepared and evaluated in the same manner as in Example 1 except that the compound (2) serving as a conductive polymer was replaced with the compound (32) having the following formula. The results are presented in Table 1-2.

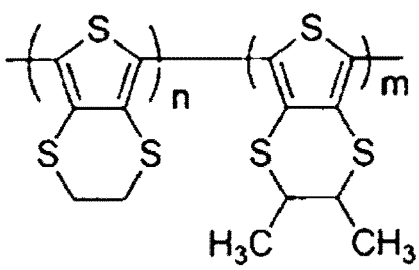

(32)

In the above formula, n represents a natural number of 2 or more, and m represents zero or a natural number

of 2 or more.

Example 11

A nonaqueous electrolyte power storage element of Example 11 was prepared and evaluated in the same manner as in Example 1 except that the compound (2) serving as a conductive polymer was replaced with the compound (36) having the following formula. The results are presented in Table 1-3.

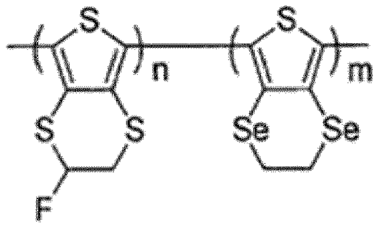

(36)

In the above formula, n represents a natural number of 2 or more, and m represents zero or a natural number of 2 or more.

Example 12

A nonaqueous electrolyte power storage element of Example 12 was prepared and evaluated in the same manner as in Example 1 except that the compound (2) serving as a conductive polymer was replaced with the compound (44) having the following formula. The results are presented in Table 1-3.

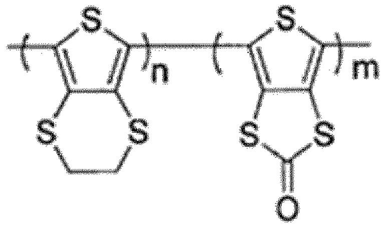

(44)

In the above formula, n represents a natural number of 2 or more, and m represents zero or a natural number of 2 or more.

Example 13

A nonaqueous electrolyte power storage element of Example 13 was prepared and evaluated in the same manner as in Example 1 except that the compound (2) serving as a conductive polymer was replaced with the compound (46) having the following formula. The results are presented in Table 1-3.

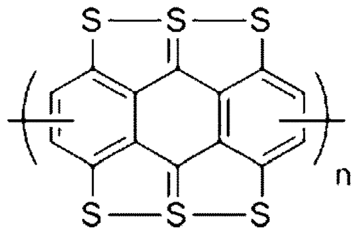

(46)

In the above formula, n represents a natural number of 2 or more.

Example 14

A nonaqueous electrolyte power storage element of Example 14 was prepared and evaluated in the same manner as in Example 1 except that the compound (2) serving as a conductive polymer was replaced with the compound (47) having the following formula. The results are presented in Table 1-3.

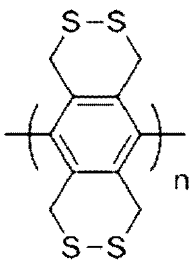

(47)

In the above formula, n represents a natural number of 2 or more.

Example 15

A nonaqueous electrolyte power storage element of Example 15 was prepared and evaluated in the same manner as in Example 1 except that the compound (2) serving as a conductive polymer was replaced with the compound (48) having the following formula. The results are presented in Table 1-3.

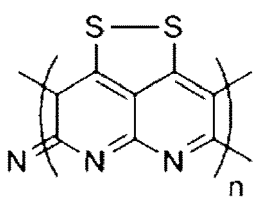

(48)

In the above formula, n represents a natural number of 2 or more.

Example 16

A nonaqueous electrolyte power storage element of Example 16 was prepared and evaluated in the same manner as in Example 1 except that the compound (2) serving as a conductive polymer was replaced with the compound (49) having the following formula. The results are presented in Table 1-4.

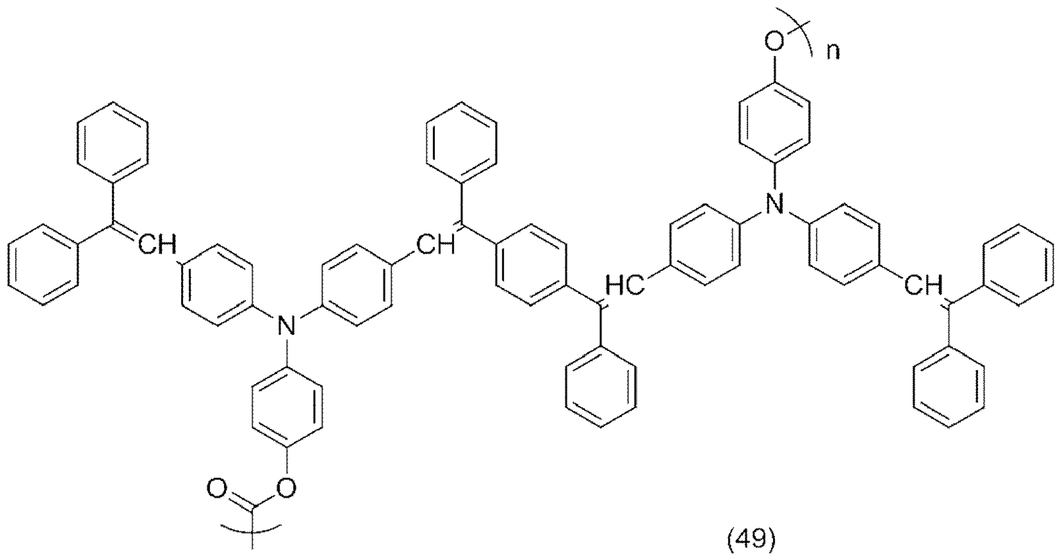

(49)

In the above formula, n represents a natural number of 2 or more.

Example 17

A nonaqueous electrolyte power storage element of Example 17 was prepared and evaluated in the same manner as in Example 1 except that the compound (2) serving as a conductive polymer was replaced with the compound (50) having the following formula. The results are presented in Table 1-4.

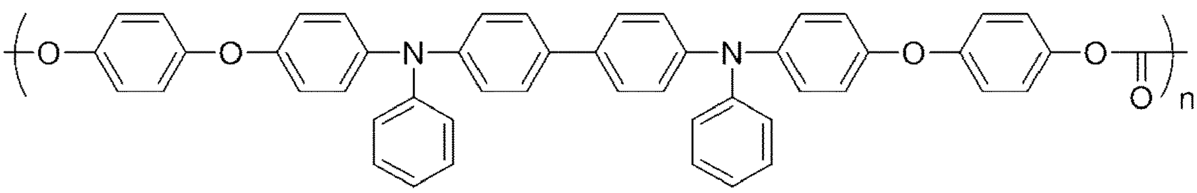

(50)

In the above formula, n represents a natural number of 2 or more.

Example 18

A nonaqueous electrolyte power storage element of Example 18 was prepared and evaluated in the same manner as in Example 1 except that the compound (2) serving as a conductive polymer was replaced with the compound (51) having the following formula. The results are presented in Table 1-4.

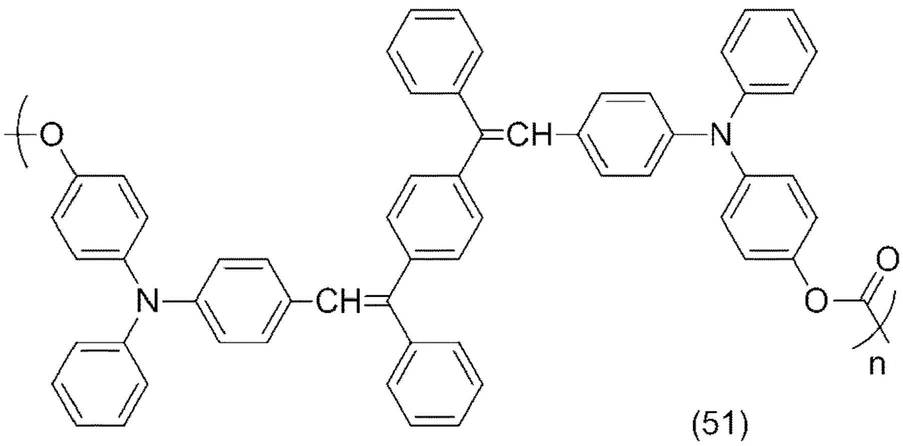

(51)

In the above formula, n represents a natural number of 2 or more.

Example 19

A nonaqueous electrolyte power storage element of Example 19 was prepared and evaluated in the same manner as in Example 1 except that the compound (2) serving as a conductive polymer was replaced with the compound (52) having the following formula. The results are presented in Table 1-4.

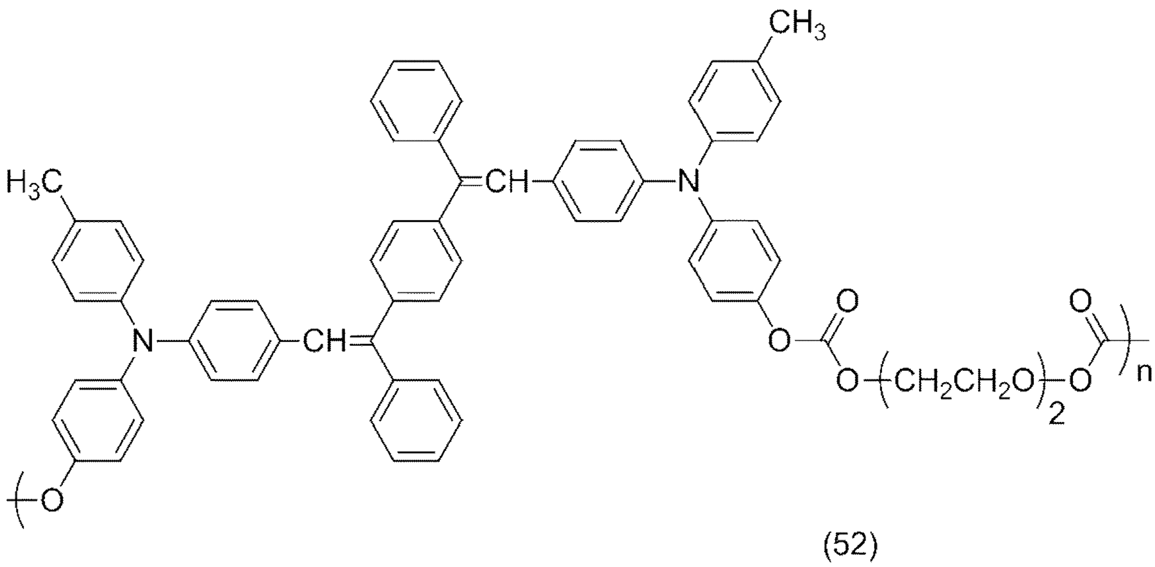

(52)

In the above formula, n represents a natural number of 2 or more.

Example 20

A nonaqueous electrolyte power storage element of Example 20 was prepared and evaluated in the same manner as in Example 1 except that the compound (2) serving as a conductive polymer was replaced with the compound (53) having the following formula. The results are presented in Table 1-4.

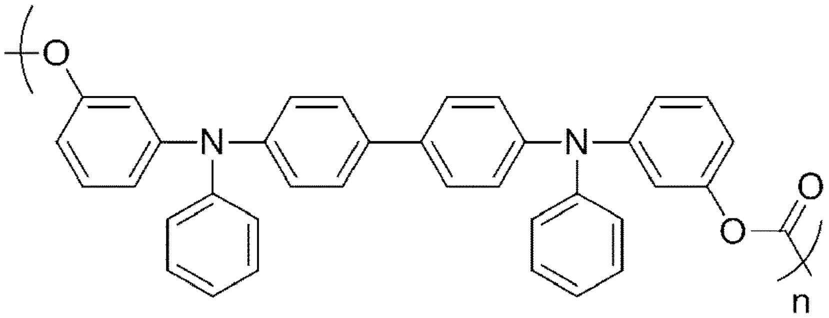

(53)

In the above formula, n represents a natural number of 2 or more.

Example 21

A nonaqueous electrolyte power storage element of Example 21 was prepared and evaluated in the same manner as in Example 1 except that the compound (2) serving as a conductive polymer was replaced with the compound (54) having the following formula. The results are presented in Table 1-5.

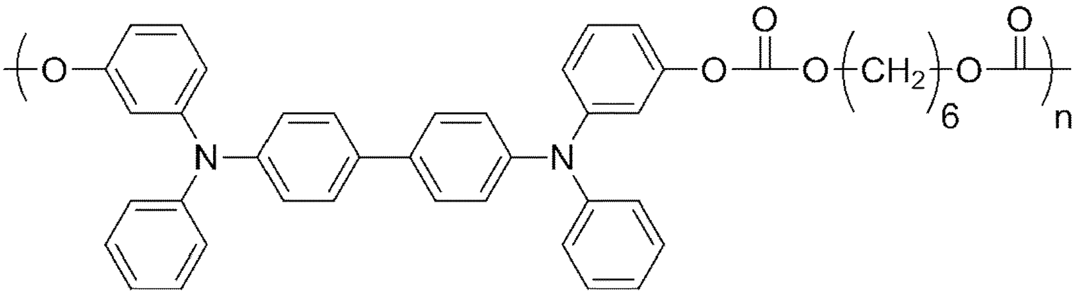

(54)

In the above formula, n represents a natural number of 2 or more.

Example 22

A nonaqueous electrolyte power storage element of Example 22 was prepared and evaluated in the same manner as in Example 1 except that the compound (2) serving as a conductive polymer was replaced with the compound (55) having the following formula. The results are presented in Table 1-5.

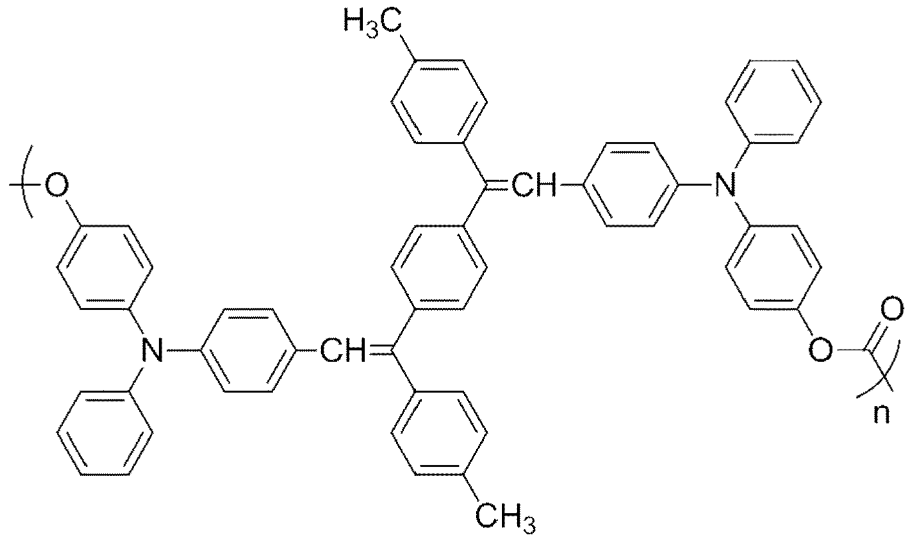

(55)

In the above formula, n represents a natural number of 2 or more.

Example 23

A nonaqueous electrolyte power storage element of Example 23 was prepared and evaluated in the same manner as in Example 1 except that the compound (2) serving as a conductive polymer was replaced with the compound (56) having the following formula. The results are presented in Table 1-5.

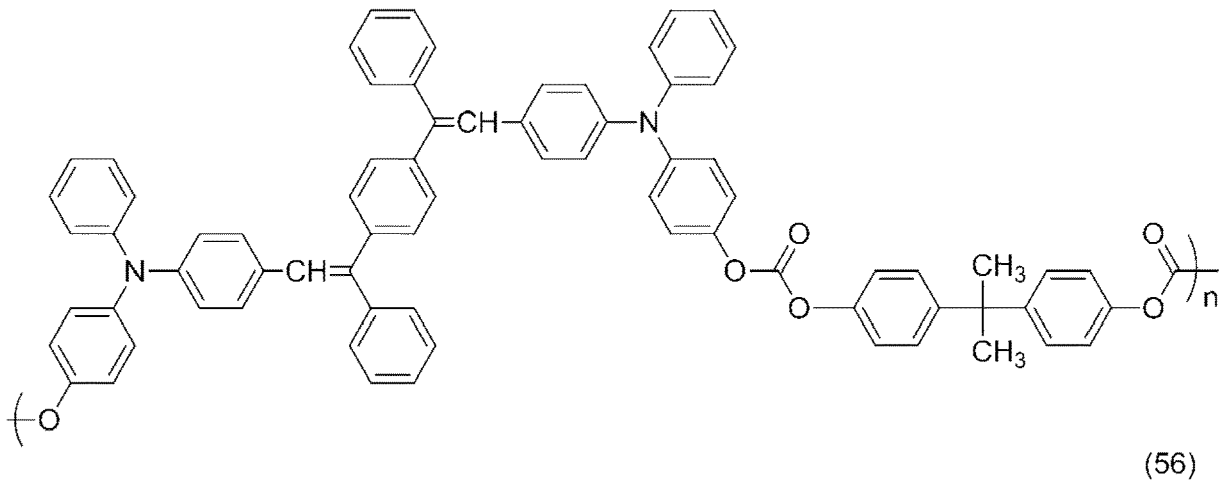

(56)

In the above formula, n represents a natural number of 2 or more.

Example 24

A nonaqueous electrolyte power storage element of Example 24 was prepared and evaluated in the same manner as in Example 1 except that the compound (2) serving as a conductive polymer was replaced with the compound (57) having the following formula. The results are presented in Table 1-5.

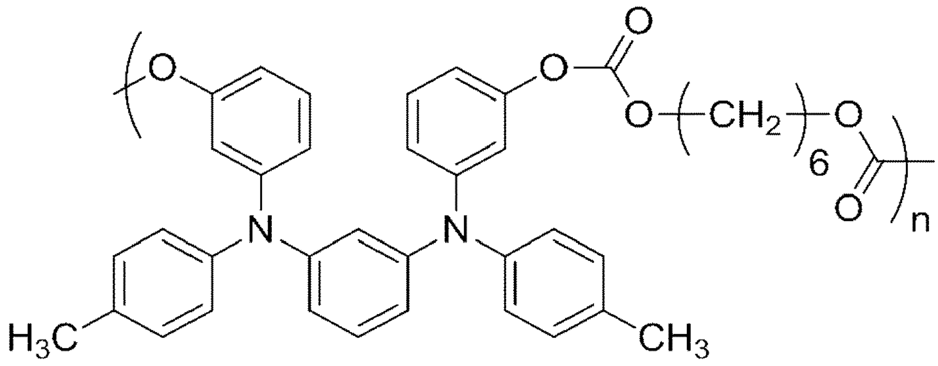

(57)

In the above formula, n represents a natural number of 2 or more.

Example 25

A nonaqueous electrolyte power storage element of Example 25 was prepared and evaluated in the same manner as in Example 1 except that the compound (2) serving as a conductive polymer was replaced with the compound (58) having the following formula. The results are presented in Table 1-5.

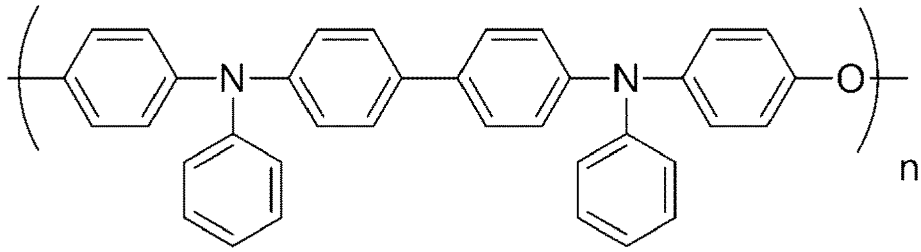

(58)

In the above formula, n represents a natural number of 2 or more.

Example 26

A nonaqueous electrolyte power storage element of Example 26 was prepared and evaluated in the same manner as in Example 1 except that the compound (2) serving as a conductive polymer was replaced with the compound (59) having the following formula. The results are presented in Table 1-6.

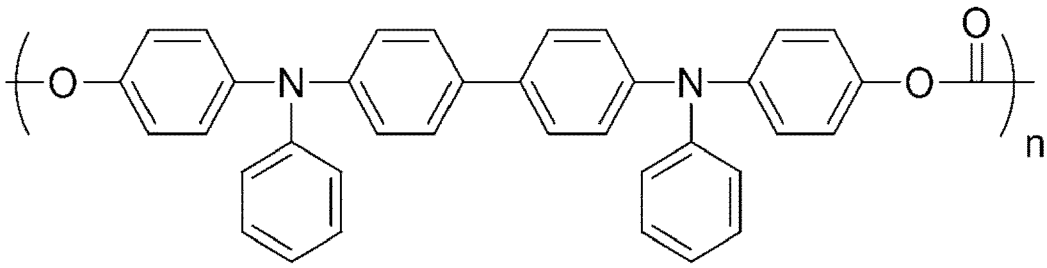

(59)

In the above formula, n represents a natural number of 2 or more.

Example 27

A nonaqueous electrolyte power storage element of Example 27 was prepared and evaluated in the same manner as in Example 1 except that the compound (2) serving as a conductive polymer was replaced with the compound (60) having the following formula. The results are presented in Table 1-6.

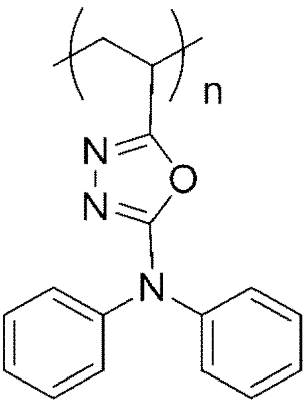

(60)

In the above formula, n represents a natural number of 2 or more.

Example 28

A nonaqueous electrolyte power storage element of Example 28 was prepared and evaluated in the same manner as in Example 1 except that the compound (2) serving as a conductive polymer was replaced with the compound (61) having the following formula. The results are presented in Table 1-6.

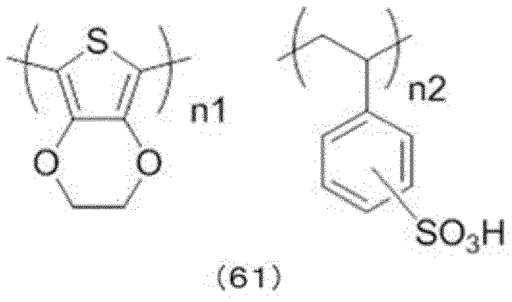

(61)

In the above formula, each of n1 and n2 independently represents a natural number of 2 or more.

Example 29

A nonaqueous electrolyte power storage element of Example 29 was prepared and evaluated in the same manner as in Example 1 except that the compound (2) serving as a conductive polymer was replaced with the compound (62) having the following formula. The results are presented in Table 1-6.

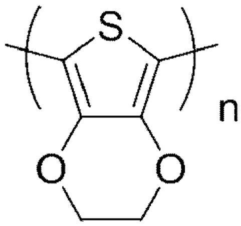

(62)

In the above formula, n represents a natural number of 2 or more.

Example 30

A nonaqueous electrolyte power storage element of Example 30 was prepared and evaluated in the same manner as in Example 1 except that the compound (2) serving as a conductive polymer was replaced with the compound (63) having the following formula. The results are presented in Table 1-6.

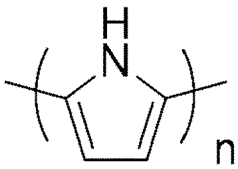

(63)

In the above formula, n represents a natural number of 2 or more.

Example 31

A nonaqueous electrolyte power storage element of Example 31 was prepared and evaluated in the same manner as in Example 1 except that the compound (2) serving as a conductive polymer was replaced with the compound (64) having the following formula. The results are presented in Table 1-7.

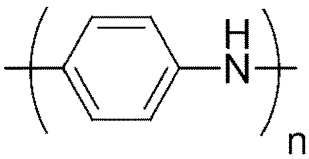

(64)

In the above formula, n represents a natural number of 2 or more.

Example 32

A nonaqueous electrolyte power storage element of Example 32 was prepared and evaluated in the same manner as in Example 1 except that the compound (2) serving as a conductive polymer was replaced with the compound (65) having the following formula. The results are presented in Table 1-7.

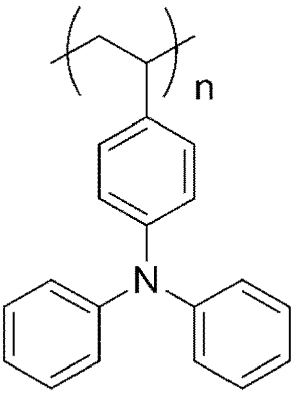

(65)

In the above formula, n represents a natural number of 2 or more.

Examples 33 to 38

Change in Mass Ratio between Porous Carbon and Conductive Polymer

Nonaqueous electrolyte power storage elements of Examples 33 to 38 were prepared and evaluated in the same manner as in Example 1 except that the mass ratio (%) between the porous carbon A and the compound (2) serving as a conductive polymer was changed to those described in Tables 2-1 and 2-2. The results are presented in Tables 2-1 and 2-2.

Example 39

Change of Porous Carbon

A nonaqueous electrolyte power storage element of Example 39 was prepared and evaluated in the same manner as in Example 1 except that the porous carbon A was replaced with another porous carbon B (CNovel®, registered trademark, manufactured by Toyo Tanso Co., Ltd.). The results are presented in Table 3. The porous carbon B is a porous carbon with high crystallinity. The crystallinity thereof was evaluated from an X-ray diffraction spectrum thereof.

The X-ray diffraction spectrum was obtained by X-ray diffractometry with an X-ray diffractometer (DISCOVER 8 available from Bruker) using CuK$\alpha$ ray as an X-ray source. The X-ray diffraction spectrum of the porous carbon B had a diffraction peak derived from regularity of the graphite layer structure in the Bragg angle 2$\theta$ range of from 25.00 and 27.00. Therefore, it can be said that the porous carbon B has high crystallinity. On the other hand, in the X-ray diffraction spectrum of the porous carbon A, a gentle mountain-shaped spectrum was confirmed in the above-described region for Bragg angle 2$\theta$. Therefore, it can be said that the porous carbon A is an amorphous porous carbon. The BET specific surface area, the pore volume, and the average diameter of the pores of the porous carbon B particles were 1,130 $m^2/g$, 1.5 mL/g, and 5 nm, respectively.

Examples 40 to 44

Combination with Other Active Materials

The cathode active material A used in the process of preparing the active material in Example 1 was designated a first cathode active material. An activated carbon (BELLFINE® AP manufactured by AT ELECTRODE CO., LTD.) was designated as a second cathode active material. The first cathode active material and the second cathode active material were mixed at respective ratios presented in Table 4 and the resulting mixtures were respectively designated as cathode active materials B, C, D, E, and F. Nonaqueous electrolyte power storage elements of Examples 40 to 44 were prepared and evaluated in the same manner as in Example 1 except that the cathode active material A used in preparing the cathode slurry was replaced with the cathode active materials B, C, D, E, and F, respectively. The results are presented in Table 4. The BET specific surface area of the activated carbon (BELLFINE® AP manufactured by AT ELECTRODE CO., LTD.) was 1,730 $m^2/g$.

Comparative Example 1

A nonaqueous electrolyte power storage element of Comparative Example 1 was prepared and evaluated in the same manner as in Example 1 except that the porous carbon A was replaced with an activated carbon (BELLFINE® AP manufactured by AT ELECTRODE CO., LTD.). The results are presented in Table 5-1.

Comparative Example 2

A nonaqueous electrolyte power storage element of Comparative Example 2 was prepared and evaluated in the same manner as in Example 1 except that the porous carbon A was replaced with a natural graphite (Special-grade CP ("TOKU CP") of CP Series manufactured by Nippon Graphite Industries, Co., Ltd.). The results are presented in Table 5-1.

The BET specific surface area of the natural graphite (Special-grade CP ("TOKU CP") of CP Series manufactured by Nippon Graphite Industries, Co., Ltd.) was 17 $m^2/g$.

Comparative Example 3

A nonaqueous electrolyte power storage element of Comparative Example 3 was prepared and evaluated in the same manner as in Example 1 except that the porous carbon A was replaced with a poorly-graphitizable carbon (BELLFINE® LN manufactured by AT ELECTRODE CO., LTD.). The results are presented in Table 5-1.

The BET specific surface area of the poorly-graphitizable carbon (BELLFINE® LN manufactured by AT ELECTRODE CO., LTD.) was 6 $m^2/g$.

Comparative Example 4

A nonaqueous electrolyte power storage element of Comparative Example 4 was prepared and evaluated in the same manner as in Example 1 except that the porous carbon A was replaced with a mesoporous carbon (Carbon Mesoporous manufactured by Sigma-Aldrich Co. LLC). The results are presented in Table 5-2.

The BET specific surface area, the pore volume, and the average diameter of the pores of the mesoporous carbon (Carbon Mesoporous manufactured by Sigma-Aldrich Co. LLC) were 250 $m^2/g$, 0.3 mL/g, and 6 nm, respectively.

Comparative Example 5

A nonaqueous electrolyte power storage element of Comparative Example 5 was prepared and evaluated in the same manner as in Example 1 except that the porous carbon A was replaced with an acetylene black (DENKA BLACK in powder form, manufactured by Denka Company Limited). The results are presented in Table 5-2.

The BET specific surface area of the acetylene black (DENKA BLACK in powder form, manufactured by Denka Company Limited) was 70 $m^2/g$.

Comparative Example 6

A nonaqueous electrolyte power storage element of Comparative Example 6 was prepared and evaluated in the same manner as in Example 1 except that the porous carbon A was replaced with a Ketjen black (EC600JD in granular form, manufactured by Lion Specialty Chemicals Co., Ltd.). The results are presented in Table 5-2.

The BET specific surface area of the Ketjen black (EC600JD in granular form, manufactured by Lion Specialty Chemicals Co., Ltd.) was 1,300 $m^2/g$.

Comparative Example 7

A nonaqueous electrolyte power storage element of Comparative Example 7 was prepared and evaluated in the same manner as in Example 1 except that the porous carbon A served as a sole cathode active material. The results are presented in Table 5-2. The discharge curve at 0.2-C discharge and the discharge curve at 10-C discharge obtained in Comparative Example 7 are presented in FIG. 9.

Comparative Example 8

A nonaqueous electrolyte power storage element of Comparative Example 8 was prepared and evaluated in the same manner as in Example 1 except that an activated carbon (BELLFINE® AP manufactured by AT ELECTRODE CO., LTD.) served as a sole cathode active material. The results are presented in Table 5-2.

Table 1-1

| | | | Example 1 | Example 2 | Example 3 | Example 4 | Example 5 |
|---|---|---|---|---|---|---|---|
| Cathode | Presence of Composite Active Material | | Yes | Yes | Yes | Yes | Yes |
| | Cathode Active Material (Carbon Material) | Material Type | Porous Carbon A | Porous Carbon A | Porous Carbon A | Porous Carbon A | Porous Carbon A |
| | | (% by mass) | 70 | 70 | 70 | 70 | 70 |
| | | Three-dimensional Network Structure | Yes | Yes | Yes | Yes | Yes |
| | Cathode Active Material (Conductive Polymer) | Material Type (Compound No.) | (2) | (3) | (4) | (5) | (8) |
| | | (% by mass) | 30 | 30 | 30 | 30 | 30 |
| | Cathode Current Collector | Type | Aluminum Foil | Aluminum Foil | Aluminum Foil | Aluminum Foil | Aluminum Foil |
| | | Average Thickness (μm) | 20 | 20 | 20 | 20 | 20 |
| | Binder | Type | Acrylate-based Latex | Acrylate-based Latex | Acrylate-based Latex | Acrylate-based Latex | Acrylate-based Latex |
| | Thickener | Type | Carboxymethyl Cellulose | Carboxymethyl Cellulose | Carboxymethyl Cellulose | Carboxymethyl Cellulose | Carboxymethyl Cellulose |
| | Mass per Unit Area of Active Material (mglcm2) | | 3.0 | 3.0 | 3.0 | 3.0 | 3.0 |
| | Volume Density of Cathode ($g/cm^3$) | | 1.2 | 1.2 | 1.2 | 1.2 | 1.2 |
| Anode | | Type | Lithium Metal Foil | Lithium Metal Foil | Lithium Metal Foil | Lithium Metal Foil | Lithium Metal Foil |
| | | Average Thickness (μm) | 100 | 100 | 100 | 100 | 100 |
| Charge-Discharge Test Conditions | | Voltage Range (V) | 1.7 to 4.4 | 1.7 to 4.4 | 1.7 to 4.4 | 1.7 to 4.4 | 1.7 to 4.4 |

(continued)

| | | Example 1 | Example 2 | Example 3 | Example 4 | Example 5 |
|---|---|---|---|---|---|---|
| Evaluation Results | 0.2-C Discharge Capacity (mAh/g) | 82.2 | 77.8 | 84.4 | 72.9 | 64.0 |
| | 10-C Discharge Capacity (mAh/g) | 55.5 | 52.9 | 56.5 | 49.6 | 44.2 |
| | Capacity Ratio (%) | 67 | 68 | 67 | 68 | 69 |
| | Energy Density (Wh/L) | 40.0 | 37.8 | 41.1 | 35.5 | 31.1 |
| | High Energy Density Property | A | A | A | A | A |
| | High Output Characteristics | A | A | A | A | A |

Table 1-2

| | | | Example 6 | Example 7 | Example 8 | Example 9 | Example 10 |
|---|---|---|---|---|---|---|---|
| Cathode | Presence of Composite Active Material | | Yes | Yes | Yes | Yes | Yes |
| | Cathode Active Material (Carbon Material) | Material Type | Porous Carbon A | Porous Carbon A | Porous Carbon A | Porous Carbon A | Porous Carbon A |
| | | (% by mass) | 70 | 70 | 70 | 70 | 70 |
| | | Three-dimensional Network Structure | Yes | Yes | Yes | Yes | Yes |
| | Cathode Active Material (Conductive Polymer) | Material Type (Compound No.) | (10) | (11) | (16) | (26) | (32) |
| | | (% by mass) | 30 | 30 | 30 | 30 | 30 |
| | Cathode Current Collector | Type | Aluminum Foil | Aluminum Foil | Aluminum Foil | Aluminum Foil | Aluminum Foil |
| | | Average Thickness (μm) | 20 | 20 | 20 | 20 | 20 |
| | Binder | Type | Acrylate-based Latex | Acrylate-based Latex | Acrylate-based Latex | Acrylate-based Latex | Acrylate-based Latex |
| | Thickener | Type | Carboxymethyl Cellulose | Carboxymethyl Cellulose | Carboxymethyl Cellulose | Carboxymethyl Cellulose | Carboxymethyl Cellulose |
| | Mass per Unit Area of Active Material ($mg/cm^2$) | | 3.0 | 3.0 | 3.0 | 3.0 | 3.0 |
| | Volume Density of Cathode ($g/cm^3$) | | 1.2 | 1.2 | 1.2 | 1.2 | 1.2 |
| Anode | | Type | Lithium Metal Foil | Lithium Metal Foil | Lithium Metal Foil | Lithium Metal Foil | Lithium Metal Foil |
| | | Average Thickness (μm) | 100 | 100 | 100 | 100 | 100 |
| Charge-Discharge Test Conditions | | Voltage Range (V) | 1.7 to 4.4 | 1.7 to 4.4 | 1.7 to 4.4 | 1.7 to 4.4 | 1.7 to 4.4 |

(continued)

| | | Example 6 | Example 7 | Example 8 | Example 9 | Example 10 |
|---|---|---|---|---|---|---|
| Evaluation Results | 0.2-C Discharge Capacity (mAh/p) | 69.6 | 68.1 | 74.1 | 64.1 | 76.6 |
| | 10-C Discharge Capacity (mAh/p) | 47.3 | 46.4 | 49.6 | 44.2 | 51.3 |
| | Capacity Ratio (%) | 68 | 68 | 67 | 69 | 67 |
| | Energy Density (Wh/L) | 33.9 | 33.1 | 36.0 | 31.2 | 37.2 |
| | High Energy Density Property | A | A | A | A | A |
| | High Output Characteristics | A | A | A | A | A |

Table 1-3

| | | | Example 11 | Example 12 | Example 13 | Example 14 | Example 15 |
|---|---|---|---|---|---|---|---|
| Cathode | Presence of Composite Active Material | | Yes | Yes | Yes | Yes | Yes |
| | Cathode Active Material (Carbon Material) | Material Type | Porous Carbon A | Porous Carbon A | Porous Carbon A | Porous Carbon A | Porous Carbon A |
| | | (% by mass) | 70 | 70 | 70 | 70 | 70 |
| | | Three-dimensional Network Structure | Yes | Yes | Yes | Yes | Yes |
| | Cathode Active Material (Conductive Polymer) | Material Type (Compound No.) | (36) | (44) | (46) | (47) | (48) |
| | | (% by mass) | 30 | 30 | 30 | 30 | 30 |
| | Cathode Current Collector | Type | Aluminum Foil | Aluminum Foil | Aluminum Foil | Aluminum Foil | Aluminum Foil |
| | | Average Thickness (μm) | 20 | 20 | 20 | 20 | 20 |
| | Binder | Type | Acrylate-based Latex | Acrylate-based Latex | Acrylate-based Latex | Acrylate-based Latex | Acrylate-based Latex |
| | Thickener | Type | Carboxymethyl Cellulose | Carboxymethyl Cellulose | Carboxymethyl Cellulose | Carboxymethyl Cellulose | Carboxymethyl Cellulose |
| | Mass per Unit Area of Active Material (mglcm2) | | 3.0 | 3.0 | 3.0 | 3.0 | 3.0 |
| | Volume Density of Cathode ($g/cm^3$) | | 1.2 | 1.2 | 1.2 | 1.2 | 1.2 |
| Anode | | Type | Lithium Metal Foil | Lithium Metal Foil | Lithium Metal Foil | Lithium Metal Foil | Lithium Metal Foil |
| | | Average Thickness (μm) | 100 | 100 | 100 | 100 | 100 |
| Charge-Discharge Test Conditions | | Voltage Range (V) | 1.7 to 4.4 | 1.7 to 4.4 | 1.7 to 4.4 | 1.7 to 4.4 | 1.7 to 4.4 |

(continued)

| | | Example 11 | Example 12 | Example 13 | Example 14 | Example 15 |
|---|---|---|---|---|---|---|
| Evaluation Results | 0.2-C Discharge Capacity (mAh/g) | 66.3 | 67.0 | 70.2 | 80.1 | 81.3 |
| | 10-C Discharge Capacity (mAh/g) | 45.1 | 45.6 | 41.1 | 43.0 | 43.1 |
| | Capacity Ratio (%) | 68 | 68 | 59 | 54 | 53 |
| | Energy Density (Wh/L) | 32.3 | 32.6 | 29.4 | 30.7 | 30.8 |
| | High Energy Density Property | A | A | B | B | B |
| | High Output Characteristics | A | A | B | B | B |

Table 1-4

| | | | Example 16 | Example 17 | Example 18 | Example 19 | Example 20 |
|---|---|---|---|---|---|---|---|
| Cathode | Presence of Composite Active Material | | Yes | Yes | Yes | Yes | Yes |
| | Cathode Active Material (Carbon Material) | Material Type | Porous Carbon A | Porous Carbon A | Porous Carbon A | Porous Carbon A | Porous Carbon A |
| | | (% by mass) | 70 | 70 | 70 | 70 | 70 |
| | | Three-dimensional Network Structure | Yes | Yes | Yes | Yes | Yes |
| | Cathode Active Material (Conductive Polymer) | Material Type (Compound No.) | (49) | (50) | (51) | (52) | (53) |
| | | (% by mass) | 30 | 30 | 30 | 30 | 30 |
| | Cathode Current Collector | Type | Aluminum Foil | Aluminum Foil | Aluminum Foil | Aluminum Foil | Aluminum Foil |
| | | Average Thickness (μm) | 20 | 20 | 20 | 20 | 20 |
| | Binder | Type | Acrylate-based Latex | Acrylate-based Latex | Acrylate-based Latex | Acrylate-based Latex | Acrylate-based Latex |
| | Thickener | Type | Carboxymethyl Cellulose | Carboxymethyl Cellulose | Carboxymethyl Cellulose | Carboxymethyl Cellulose | Carboxymethyl Cellulose |
| | Mass per Unit Area of Active Material (mglcm2) | | 3.0 | 3.0 | 3.0 | 3.0 | 3.0 |
| | Volume Density of Cathode (g/cm$^3$) | | 1.2 | 1.2 | 1.2 | 1.2 | 1.2 |
| Anode | | Type | Lithium Metal Foil | Lithium Metal Foil | Lithium Metal Foil | Lithium Metal Foil | Lithium Metal Foil |
| | | Average Thickness (μm) | 100 | 100 | 100 | 100 | 100 |
| Charge-Discharge Test Conditions | | Voltage Range (V) | 1.7 to 4.4 | 1.7 to 4.4 | 1.7 to 4.4 | 1.7 to 4.4 | 1.7 to 4.4 |

(continued)

| | | Example 16 | Example 17 | Example 18 | Example 19 | Example 20 |
|---|---|---|---|---|---|---|
| Evaluation Results | 0.2-C Discharge Capacity (mAh/g) | 74.3 | 84.1 | 83.9 | 71.1 | 80.3 |
| | 10-C Discharge Capacity (mAh/g) | 46.0 | 50.4 | 51.0 | 44.0 | 52.4 |
| | Capacity Ratio (%) | 61.9 | 59.9 | 60.7 | 61.9 | 65.2 |
| | Energy Density (Wh/L) | 33.8 | 40.5 | 39.9 | 31.1 | 36.7 |
| | High Energy Density Property | A | A | A | A | A |
| | High Output Characteristics | A | A | A | A | A |

Table 1-5

| | | | Example 21 | Example 22 | Example 23 | Example 24 | Example 25 |
|---|---|---|---|---|---|---|---|
| Cathode | Presence of Composite Active Material | | Yes | Yes | Yes | Yes | Yes |
| | Cathode Active Material (Carbon Material) | Material Type | Porous Carbon A | Porous Carbon A | Porous Carbon A | Porous Carbon A | Porous Carbon A |
| | | (% by mass) | 70 | 70 | 70 | 70 | 70 |
| | | Three-dimensional Network Structure | Yes | Yes | Yes | Yes | Yes |
| | Cathode Active Material (Conductive Polymer) | Material Type (Compound No.) | (54) | (55) | (56) | (57) | (58) |
| | | (% by mass) | 30 | 30 | 30 | 30 | 30 |
| | Cathode Current Collector | Type | Aluminum Foil | Aluminum Foil | Aluminum Foil | Aluminum Foil | Aluminum Foil |
| | | Average Thickness (μm) | 20 | 20 | 20 | 20 | 20 |
| | Binder | Type | Acrylate-based Latex | Acrylate-based Latex | Acrylate-based Latex | Acrylate-based Latex | Acrylate-based Latex |
| | Thickener | Type | Carboxymethyl Cellulose | Carboxymethyl Cellulose | Carboxymethyl Cellulose | Carboxymethyl Cellulose | Carboxymethyl Cellulose |
| | Mass per Unit Area of Active Material (mglcm2) | | 3.0 | 3.0 | 3.0 | 3.0 | 3.0 |
| | Volume Density of Cathode ($g/cm^3$) | | 1.2 | 1.2 | 1.2 | 1.2 | 1.2 |
| Anode | | Type | Lithium Metal Foil | Lithium Metal Foil | Lithium Metal Foil | Lithium Metal Foil | Lithium Metal Foil |
| | | Average Thickness (μm) | 100 | 100 | 100 | 100 | 100 |
| Charge-Discharge Test Conditions | | Voltage Range (V) | 1.7 to 4.4 | 1.7 to 4.4 | 1.7 to 4.4 | 1.7 to 4.4 | 1.7 to 4.4 |

(continued)

| | | Example 21 | Example 22 | Example 23 | Example 24 | Example 25 |
|---|---|---|---|---|---|---|
| Evaluation Results | 0.2-C Discharge Capacity (mAh/g) | 72.7 | 65.9 | 68.7 | 70.1 | 79.3 |
| | 10-C Discharge Capacity (mAh/g) | 43.9 | 42.1 | 41.5 | 44.1 | 49.5 |
| | Capacity Ratio (%) | 60.3 | 63.8 | 60.4 | 62.9 | 62.4 |
| | Energy Density (Wh/L) | 31.5 | 30.2 | 31.3 | 31.9 | 33.9 |
| | High Energy Density Property | A | B | A | A | A |
| | High Output Characteristics | A | A | A | A | A |

Table 1-6

| | | | Example 26 | Example 27 | Example 28 | Example 29 | Example 30 |
|---|---|---|---|---|---|---|---|
| Cathode | Presence of Composite Active Material | | Yes | Yes | Yes | Yes | Yes |
| | Cathode Active Material (Carbon Material) | Material Type | Porous Carbon A | Porous Carbon A | Porous Carbon A | Porous Carbon A | Porous Carbon A |
| | | (% by mass) | 70 | 70 | 70 | 70 | 70 |
| | | Three-dimensional Network Structure | Yes | Yes | Yes | Yes | Yes |
| | Cathode Active Material (Conductive Polymer) | Material Type (Compound No.) | (59) | (60) | (61) | (62) | (63) |
| | | (% by mass) | 30 | 30 | 30 | 30 | 30 |
| | Cathode Current Collector | Type | Aluminum Foil | Aluminum Foil | Aluminum Foil | Aluminum Foil | Aluminum Foil |
| | | Average Thickness (μm) | 20 | 20 | 20 | 20 | 20 |
| | Binder | Type | Acrylate-based Latex | Acrylate-based Latex | Acrylate-based Latex | Acrylate-based Latex | Acrylate-based Latex |
| | Thickener | Type | Carboxymethyl Cellulose | Carboxymethyl Cellulose | Carboxymethyl Cellulose | Carboxymethyl Cellulose | Carboxymethyl Cellulose |
| | Mass per Unit Area of Active Material (mglcm2) | | 3.0 | 3.0 | 3.0 | 3.0 | 3.0 |
| | Volume Density of Cathode (g/cm$^3$) | | 1.2 | 1.2 | 1.2 | 1.2 | 1.2 |
| Anode | | Type | Lithium Metal Foil | Lithium Metal Foil | Lithium Metal Foil | Lithium Metal Foil | Lithium Metal Foil |
| | | Average Thickness (μm) | 100 | 100 | 100 | 100 | 100 |
| Charge-Discharge Test Conditions | | Voltage Range (V) | 1.7 to 4.4 | 1.7 to 4.4 | 1.7 to 4.4 | 1.7 to 4.4 | 1.7 to 4.4 |

(continued)

| | | Example 26 | Example 27 | Example 28 | Example 29 | Example 30 |
|---|---|---|---|---|---|---|
| Evaluation Results | 0.2-C Discharge Capacity (mAh/g) | 69.1 | 68.8 | 70.8 | 66.2 | 71.9 |
| | 10-C Discharge Capacity (mAh/g) | 43.5 | 37.1 | 47.4 | 40.2 | 45.3 |
| | Capacity Ratio (%) | 62.9 | 53.9 | 66.9 | 60.7 | 63 |
| | Energy Density (Wh/L) | 31.3 | 32.7 | 35.4 | 31 | 31.5 |
| | High Energy Density Property | A | A | A | A | A |
| | High Output Characteristics | A | B | A | A | A |

Table 1-7

| | | | Example 31 | Example 32 |
|---|---|---|---|---|
| Cathode | Presence of Composite Active Material | | Yes | Yes |
| | Cathode Active Material (Carbon Material) | Material Type | Porous Carbon A | Porous Carbon A |
| | | (% by mass) | 70 | 70 |
| | | Three-dimensional Network Structure | Yes | Yes |
| | Cathode Active Material (Conductive Polymer) | Material Type (Compound No.) | (64) | (65) |
| | | (% by mass) | 30 | 30 |
| | Cathode Current Collector | Type | Aluminum Foil | Aluminum Foil |
| | | Average Thickness (μm) | 20 | 20 |
| | Binder | Type | Acrylate-based Latex | Acrylate-based Latex |
| | Thickener | Type | Carboxymethyl Cellulose | Carboxymethyl Cellulose |
| | Mass per Unit Area of Active Material (mg/cm2) | | 3.0 | 3.0 |
| | Volume Density of Cathode (g/cm$^3$) | | 1.2 | 1.2 |
| Anode | | Type | Lithium Metal Foil | Lithium Metal Foil |
| | | Average Thickness (μm) | 100 | 100 |
| Charge-Discharge Test Conditions | | Voltage Range (V) | 1.7 to 4.4 | 1.7 to 4.4 |
| Evaluation Results | | 0.2-C Discharge Capacity (mAh/g) | 73.5 | 66.1 |
| | | 10-C Discharge Capacity (mAh/g) | 49.2 | 41.0 |
| | | Capacity Ratio (%) | 66.9 | 62 |
| | | Energy Density (Wh/L) | 34.7 | 30.1 |
| | | High Energy Density Property | A | B |
| | | High Output Characteristics | A | A |

Table 2-1

| | | | Example 33 | Example 34 | Example 35 |
|---|---|---|---|---|---|
| Cathode | Presence of Composite Active Material | | Yes | Yes | Yes |
| | Cathode Active Material (Carbon Material) | Material Type | Porous Carbon A | Porous Carbon A | Porous Carbon A |
| | | (% by mass) | 19 | 20 | 50 |
| | | Three-dimensional Network Structure | Yes | Yes | Yes |
| | Cathode Active Material (Conductive Polymer) | Material Type (Compound No.) | (2) | (2) | (2) |
| | | (% by mass) | 81 | 80 | 50 |
| | Cathode Current Collector | Type | A luminum Foil | A luminum Foil | A luminum Foil |
| | | Average Thickness (μm) | 20 | 20 | 20 |
| | Binder | Type | Acrylate-based Latex | Acrylate-based Latex | Acrylate-based Latex |
| | Thickener | Type | Carboxymethyl Cellulose | Carboxymethyl Cellulose | Carboxymethyl Cellulose |
| | Mass per Unit Area of Active Material (mg/cm$^{2}$) | | 3.0 | 3.0 | 3.0 |
| | Volume Denisity of Cathode (g/cm$^{3}$ | | 1.2 | 1.2 | 1.2 |
| Anode | | Type | Lithium Metal Foil | Lithium Metal Foil | Lithium Metal Foil |
| | | Average Thickness (μm) | 100 | 100 | 100 |
| Charge-Discharge Test Conditions | | Voltage Range (V) | 1.7 to 4.4 | 1.7 to 4.4 | 1.7 to 4.4 |
| Evaluation Results | | 0.2-C Discharge Capacity (mAh/g) | 79.0 | 84.0 | 105.2 |
| | | 10-C Discharge Capacity (mAh/g) | 44.2 | 52.9 | 70.5 |
| | | Capacity Ratio (%) | 56 | 63 | 67 |
| | | Energy Density (Wh/L) | 38.4 | 40.9 | 51.2 |
| | | High Energy Density Property | A | A | A |
| | | High Output Characteristics | B | A | A |

Table 2-2

| | | | Example 36 | Example 37 | Example 38 |
|---|---|---|---|---|---|
| Cathode | Presence of Composite Active Material | | Yes | Yes | Yes |
| | Cathode Active Material (Carbon Material) | Material Type | Porous Carbon A | Porous Carbon A | Porous Carbon A |
| | | (% by mass) | 80 | 95 | 96 |
| | | Three-dimensional Network Structure | Yes | Yes | Yes |
| | Cathode Active Material (Conductive Polymer) | Material Type (Compound No.) | (2) | (2) | (2) |
| | | (% by mass) | 20 | 5 | 4 |
| | Cathode Current Collector | Type | A luminum Foil | A luminum Foil | A luminum Foil |
| | | Average Thickness (μm) | 20 | 20 | 20 |
| | Binder | Type | Acrylate-based Latex | Acrylate-based Latex | Acrylate-based Latex |
| | Thickener | Type | Carboxymethyl Cellulose | Carboxymethyl Cellulose | Carboxymethyl Cellulose |
| | Mass per Unit Area of Active Material ($mg/cm^2$) | | 3.0 | 3.0 | 3.0 |
| | Volume Density of Cathode (g/cm3) | | 1.2 | 1.2 | 1.2 |
| Anode | | Type | Lithium Metal Foil | Lithium Metal Foil | Lithium Metal Foil |
| | | Average Thickness (μm) | 100 | 100 | 100 |
| Charge-Discharge Test Conditions | | Voltage Range (V) | 1.7 to 4.4 | 1.7 to 4.4 | 1.7 to 4.4 |
| Evaluation Results | | 0.2-C Discharge Capacity (mAh/g) | 81.5 | 76.8 | 64.4 |
| | | 10-C Discharge Capacity (mAh/g) | 54.6 | 52.2 | 43.8 |
| | | Capacity Ratio (%) | 68 | 68 | 68 |
| | | Energy Density (Wh/L) | 39.6 | 36.9 | 30.9 |
| | | High Energy Density Property | A | A | B |
| | | High Output Characteristics | A | A | A |

Table 3

| | | | Example 1 | Example 39 |
|---|---|---|---|---|
| Cathode | Presence of Composite Active Material | | Yes | Yes |
| | Cathode Active Material (Carbon Material) | Material Type | Porous Carbon A | Porous Carbon B |
| | | Crystallinity | Amorphous | High Crystallinity |
| | | (% by mass) | 70 | 70 |
| | | Three-dimensional Network Structure | Yes | Yes |
| | Cathode Active Material (Conductive Polymer) | Material Type (Compound No.) | (2) | (2) |
| | | (% by mass) | 30 | 30 |
| | Cathode Current Collector | Type | Aluminum Foil | Aluminum Foil |
| | | Average Thickness (μm) | 20 | 20 |
| | Binder | Type | Acrylate-based Latex | Acrylate-based Latex |
| | Thickener | Type | Carboxymethyl Cellulose | Carboxymethyl Cellulose |
| | Mass per Unit Area of Active Material ($mg/cm^2$) | | 3.0 | 3.0 |
| | Volume Density of Cathode ($g/cm^3$) | | 1.2 | 1.2 |
| Anode | | Type | Lithium Metal Foil | Lithium Metal Foil |
| | | Average Thickness (μm) | 100 | 100 |
| Charge-Discharge Test Conditions | | Voltage Range (V) | 1.7 to 4.4 | 1.7 to 4.4 |
| Evaluation Results | | 0.2-C Discharge Capacity (mAh/g) | 82.2 | 78.1 |
| | | 10-C Discharge Capacity (mAh/g) | 55.5 | 53.1 |
| | | Capacity Ratio (%) | 67 | 68 |
| | | Energy Density (Wh/L) | 40.0 | 38.0 |
| | | High Energy Density Property | A | A |
| | | High Output Characteristics | A | A |

Table 4

| | | Example 40 | Example 41 | Example 42 | Example 43 | Example 44 |
|---|---|---|---|---|---|---|
| First Cathode Active Material | Material Type | Porous Carbon A | Porous Carbon A | Porous Carbon A | Porous Carbon A | Porous Carbon A |
| | Ratio of First Cathode Active Material (% by mass) | 10 | 15 | 20 | 50 | 80 |
| Second Cathode Active Material | Material Type | Activated Carbon | Activated Carbon | Activated Carbon | Activated Carbon | Activated Carbon |
| | Ratio of Second Cathode Active Material (% by mass) | 90 | 85 | 80 | 50 | 20 |
| Cathode Current Collector | Type | Aluminum Foil | Aluminum Foil | Aluminum Foil | Aluminum Foil | Aluminum Foil |
| | Average Thickness (μm) | 20 | 20 | 20 | 20 | 20 |
| Binder | Type | Acrylate-based Latex | Acrylate-based Latex | Acrylate-based Latex | Acrylate-based Latex | Acrylate-based Latex |
| Thickener | Type | Carboxymethyl Cellulose | Carboxymethyl Cellulose | Carboxymethyl Cellulose | Carboxymethyl Cellulose | Carboxymethyl Cellulose |
| Mass per Unit Area of Active Material ($mg/cm^2$) | | 3.0 | 3.0 | 3.0 | 3.0 | 3.0 |
| Volume Density of Cathode ($g/cm^3$) | | 1.1 | 1.1 | 1.2 | 1.2 | 1.2 |
| Anode | Type | Lithium Metal Foil | Lithium Metal Foil | Lithium Metal Foil | Lithium Metal Foil | Lithium Metal Foil |
| | Average Thickness (μm) | 100 | 100 | 100 | 100 | 100 |
| Charge-Discharge Test | Voltage Range (V) | 1.7 to 4.4 | 1.7 to 4.4 | 1.7 to 4.4 | 1.7 to 4.4 | 1.7 to 4.4 |
| Evaluation Results | 0.2-C Discharge Capacity (mAh/g) | 62.2 | 63.3 | 64.4 | 71.1 | 77.8 |
| | 10-C Discharge Capacity (mAh/g) | 34.2 | 38.0 | 41.9 | 46.9 | 52.1 |
| | Capacity Ratio (%) | 55 | 60 | 65 | 66 | 67 |
| | Energy Density (Wh/L) | 29.9 | 30.4 | 30.9 | 34.6 | 37.8 |
| | High Energy Density Property | B | A | A | A | A |
| | High Output Characteristics | B | A | A | A | A |

Table 5-1

| | | | Comparative Example 1 | Comparative Example 2 | Comparative Example 3 | Comparative Example 4 |
|---|---|---|---|---|---|---|
| Cathode | Presence of Composite Active Material | | No | No | No | No |
| | Cathode Active Material (Carbon Material) | Material Type | Activated Carbon | Natural Graphite | Poorly-graphitizable Carbon | Mesoporous Carbon |
| | | (% by mass) | 70 | 70 | 70 | 70 |
| | | Three-dimensional Network Structure | No | No | No | No |
| | Cathode Active Material (Conductive Polvmer) | Material Type (Compound No.) | (2) | (2) | (2) | (2) |
| | | (% bv mass) | 30 | 30 | 30 | 30 |
| | Cathode Current Collector | Type | A luminum Foil | Aluminum Foil | Aluminum Foil | Aluminum Foil |
| | | Average Thickness (μm) | 20 | 20 | 20 | 20 |
| | Binder | Type | Acrylate-based Latex | Acrylate-based Latex | Acrylate-based Latex | Acrylate-based Latex |
| | Thickener | Type | Carboxymethyl Cellulose | Carboxymethyl Cellulose | Carboxymethyl Cellulose | Carboxymethyl Cellulose |
| | Mass per Unit Area of Active Material ($mg/cm^2$) | | 3.0 | 3.0 | 3.0 | 3.0 |
| | Volume Density of Cathode ($g/cm^3$) | | 0.9 | 1.2 | 1.2 | 0.8 |
| Anode | | Type | Lithium Metal Foil | Lithium Metal Foil | Lithium Metal Foil | Lithium Metal Foil |
| | | Average Thickness (μm) | 100 | 100 | 100 | 100 |
| Charge-Discharge Test Conditions | | Voltage Range (V) | 1.7 to 4.4 | 1.7 to 4.4 | 1.7 to 4.4 | 1.7 to 4.4 |

(continued)

| | | Comparative Example 1 | Comparative Example 2 | Comparative Example 3 | Comparative Example 4 |
|---|---|---|---|---|---|
| Evaluation Results | 0.2-C Discharge Capacity (mAh/g) | 50.2 | 35.1 | 19.4 | 25.3 |
| | 10-C Discharge Capacity (mAh/p) | 16.6 | 16.5 | 9.5 | 9.6 |
| | Capacity Ratio (%) | 33 | 47 | 6.8 | 38 |
| | Energy Density (Wh/L) | 23.4 | 16.7 | 9.3 | 11.5 |
| | High Energy Density Property | C | C | C | C |
| | High Output Characteristics | C | C | C | C |

Table 5-2

| | | | Comparative Example 5 | Comparative Example 6 | Comparative Example 7 | Comparative Example 8 |
|---|---|---|---|---|---|---|
| Cathode | Presence of Composite Active Material | | No | No | - | - |
| | Cathode Active Material (Carbon Material) | Material Type | Acetylene Black | Ketjen Black | Porous Carbon A | Activated Carbon |
| | | (% by mass) | 70 | 70 | 100 | 100 |
| | | Three-dimensional Network Structure | No | No | Yes | Yes |
| | Cathode Active Material (Conductive Polymer) | Material Type (Compound No.) | (2) | (2) | - | - |
| | | (% by mass) | 30 | 30 | 0 | 0 |
| | Cathode Current Collector | Type | Aluminum Foil | Aluminum Foil | Aluminum Foil | Aluminum Foil |
| | | Average Thickness (μm) | 20 | 20 | 20 | 20 |
| | Binder | Type | Acrylate-based Latex | Acrylate-based Latex | Acrylate-based Latex | Acrylate-based Latex |
| | Thickener | Type | Carboxymethyl Cellulose | Carboxymethyl Cellulose | Carboxymethyl Cellulose | Carboxymethyl Cellulose |
| | Mass per Unit Area of Active Material ($mg/cm^2$) | | 3.0 | 3.0 | 3.0 | 3.0 |
| | Volume Density of Cathode ($g/cm^3$) | | 0.5 | 0.5 | 0.8 | 0.7 |
| Anode | | Type | Lithium Metal Foil | Lithium Metal Foil | Lithium Metal Foil | Lithium Metal Foil |
| | | Average Thickness (μm) | 100 | 100 | 100 | 100 |
| Charge-Discharge Test Conditions | | Voltage Range (V) | 1.7 to 4.4 | 1.7 to 4.4 | 1.7 to 4.4 | 1.7 to 4.4 |

(continued)

| | | Comparative Example 5 | Comparative Example 6 | Comparative Example 7 | Comparative Example 8 |
|---|---|---|---|---|---|
| Evaluation Results | 0.2-C Discharge Capacity (mAh/g) | 36.9 | 36.7 | 57.2 | 60.0 |
| | 10-C Discharge Capacity (mAh/g) | 18.1 | 18.0 | 40.0 | 20.0 |
| | Capacity Ratio (%) | 49 | 49 | 70 | 33 |
| | Energy Density (Wh/L) | 15.1 | 15.0 | 26.1 | 26.6 |
| | High Energy Density Property | C | C | C | C |
| | High Output Characteristics | C | C | A | C |

It is clear from the results presented in Tables1-1 to 1-7 that high energy density and high output characteristics are achieved in Examples 1 to 32 in each of which an active material comprising a porous carbon having a plurality of pores forming a three-dimensional network structure and a conductive polymer contained in at least a part of the plurality of pores of the porous carbon is used as the cathode active material.

In particular, the polythiophene derivatives represented by the compounds (1) to (44), which are the conductive polymers used in Examples 1 to 12, contain many electrons. Therefore, it is likely that the thiophene ring contained in the molecular skeleton of such a polythiophene derivative is stabilized in an oxidized state in which electrons are released. Specifically, at the time of charging, electrons are extracted from the thiophene ring so that the thiophene ring becomes a cation, and an anion in the electrolytic solution comes closer to the thiophene ring to compensate the cation, thus stabilizing the thiophene ring. At the time of discharging, the reverse reaction occurs. Since stability is high in both the oxidized state accompanying charging and the reduced state accompanying discharging, charge-discharge repetitive characteristics (cycle characteristics) is good. The same goes even when the C rate at the time of charging and discharging is high. A redox reaction accompanying charging and discharging reversibly proceeds.

Among the exemplary compounds (1) to (65) as the conductive polymer, polythiophene derivatives having a repeating unit represented by the general formula (1) exhibit a high capacity at the time of charging and discharging. This is because they contain a plurality of sulfur atoms capable of taking a variety of oxidation numbers and therefore the occurrence of a multi-electron reaction accompanying oxidation and reduction can be expected.

Furthermore, the polythiophene derivative has a high oxidation potential (vs. $Li/Li^+$) and is capable of charging and discharging within a high voltage region, so that the average voltage of the power storage element increases. As a result, the nonaqueous electrolyte power storage element containing the polythiophene derivative exhibits a high energy density.

In addition, since the polythiophene derivative is covered with the porous carbon A having a very low resistance, good electric conduction can be achieved between the polythiophene derivative particles. Thus, a high capacity is achieved even when discharging is performed at a high C rate. As a result, high output characteristics are exhibited. Such high output characteristics are exhibited in Examples 1 to 32 despite the fact that no conductive auxiliary agent is included in the constituent materials of the cathode. This indicates that the porous carbon A has a function of forming a conductive network in the electrode, like a conductive auxiliary agent. Accordingly, the composite active materials according to Examples 1 to 32 have functions of both an active material and a conductive auxiliary agent by themselves.

The compounds (46), (47), and (48) that are the conductive polymers used in Examples 13 to 15 contain sulfur atom in the molecular skeleton and, accordingly, each have a large discharge capacity as an active material. However, disulfide bond (S-S bond) contained in the molecular skeleton undergoes cleavage and recombination accompanying oxidation and reduction reactions, so the structure stability and reversibility are slightly insufficient. Since cleavage and recombination reactions of disulfide bond accompanying oxidation and reduction occurring at a particularly high C rate are more irreversible, the discharge capacity and the output characteristics are slightly lowered at a high C rate.

On the other hand, the compounds (49) to (65) that are the conductive polymers used in Examples 16 to 32 are materials used for organic electrochromic (EL) elements and carrier transport materials for photoconductor drums. Because of their high structural stability with respect to electric conduction and oxidation/reduction, good energy density and high output characteristics are achieved.

Next, it is clear from the results of Example 1 and Examples 33 to 38 presented in Tables 2-1 and 2-2 that the discharge capacity at 0.2-C discharge decreases as the mass ratio of porous carbon A increases. This is due to a decrease in the ratio of the conductive polymer exhibiting a high capacity. In particular, when the mass ratio of the porous carbon A exceeds 95%, the energy density abruptly decreases. Therefore, the mass ratio of the porous carbon A is preferably 95% or less.

It is also clear from the results of Example 1 and Examples 33 to 38 that as the mass ratio of the porous carbon A decreases, the capacity ratio of the discharge capacity at 10-C discharge to the discharge capacity at 0.2-C discharge decreases. This is because the ratio of the conductive polymer to the porous carbon A is increased and therefore the abundance ratio of the active material containing the conductive polymer in at least a part of the plurality of the pores of the porous carbon A is decreased. As a result, the electrical conductivity of the conductive polymer becomes poor. Particularly when the mass ratio of the porous carbon A falls below 20%, the capacity ratio of the discharge capacity at 10-C discharge to the discharge capacity at 0.2-C discharge sharply decreases. To achieve high output characteristics, the mass ratio of the porous carbon A is preferably 20% or more.

Next, it is clear from the results of Examples 1 and 39 presented in Table 3 that high energy density and high output characteristics are achieved even when the crystal structure of the porous carbon is changed. This is because, even when the crystallinity of the porous carbon is changed, the pore structure three-dimensionally stretched in the carbon particles is maintained. As a result, even when either an amorphous porous carbon or a porous carbon having high crystallinity is used, a good composite state can be formed with the conductive polymer.

Next, it is clear from the results of Examples 40 to 44 presented in Table 4 that high energy density and high output characteristics are achieved even when other active material species (activated carbon) is used in combination

with the composite active material according to an embodiment of the present invention. This is because the particle structure of the composite active material does not collapse even when other active material species and the composite active material are used in combination. The composite active material expresses the same function as when used alone at the time of charging and discharging even in the presence of other active material species.

It is clear from the results presented in Tables 5-1 and 5-2 that, when comparing Example 1 and Comparative Examples 1 to 6, high energy density and high output characteristics are achieved in Example 1 in which the porous carbon A is used as the carbonaceous material in the active material. This is because the porous carbon A has a plurality of pores forming a three-dimensional network structure and, in the process of preparing the active material, the conductive polymer can be contained in at least a part of the plurality of pores. In addition, the porous carbon A can occlude anions at the time of charging. For this reason, the porous carbon A is capable of expressing a larger capacity than other carbonaceous materials, so that high energy density can be achieved.

Whether or not the conductive polymer is contained in the plurality of pores of the porous carbon A can be confirmed from a cross-sectional image of the cathode obtained by SEM and an element mapping image thereof obtained by EDS illustrated in FIGs. 5 to 7. FIG. 6 is a carbon (C) element mapping image, in which the positions of the particles are coincident with those in the cathode illustrated in FIG. 5. Thus, it is confirmed that the particles observed in FIG. 5 are the porous carbon A particles. FIG. 7 is a sulfur (S) element mapping image in which bright spots indicate the positions of sulfur element. Since a material containing S element in the cathode materials is only the polythiophene derivative, it is obvious that the polythiophene derivative is present at the position where the S element exists. Thus, it is confirmed from FIGs. 5 to 7 that the conductive polymer is contained in the pores of the porous carbon A and the active material is contained in the cathode in Example 1.

It is clear from the results presented in Table 5-2 that, when comparing Example 1 and Comparative Example 7, higher energy density is achieved in Example 1 in which the conductive polymer is contained in the pores inside the porous carbon. This is because not only the conductive polymer exhibiting a high capacity is included but also the conductive polymer is contained in the pores inside the porous carbon, so that the density of the cathode active material particles is increased and the volume density of the cathode is thereby increased. A cathode active material comprising the conductive polymer only may be studied for comparison. In this case, however, electrons transfer accompanying charging and discharging will not occur due to poor electrical conductivity of the conductive polymer alone. Therefore, no capacity can be expressed. For this reason, such a case has not been studied as a comparative example.

It is clear from the results presented in Table 5-2, when comparing Examples 40 to 44 and Comparative Example 8, higher energy density is achieved in Examples 40 to 44 in each of which the cathode active material A is used that contains the conductive polymer in the pores inside the porous carbon. This is because the cathode active material A containing the conductive polymer having a higher capacity than activated carbon is contained in the electrode. In addition, higher output characteristics are achieved in Examples 40 to 44. This indicates that mixing the cathode active material A containing a porous carbon having good electrical conductivity with other active material species (activated carbon) has an effect of reducing the overall resistance of the electrode. That is, the composite active material according to an embodiment of the present invention has a function of expressing a capacity as an active material and another function of forming a conductive network like a conductive auxiliary agent, so that high energy density and high output characteristics can be achieved, even when used in combination with other active material species.

It is clear from the above results that a power storage element containing the active material according to an embodiment of the present invention has high energy density. In addition, the power storage element also has high output characteristics because the capacity retention rate is high even at the time of discharging at a high rate.

Embodiments of the present invention provide, for example, the following items (1) to (20).

(1) An active material comprising: a porous carbon having a plurality of pores forming a three-dimensional network structure; and a conductive polymer, wherein at least a part of the plurality of pores contains the conductive polymer.

(2) The active material of the above item (1), wherein the porous carbon has a communicated pore opened at the surface of the porous carbon.

(3) The active material of the above item (1) or (2), wherein the conductive polymer comprises a polythiophene derivative having a repeating unit represented by the following general formula (1):

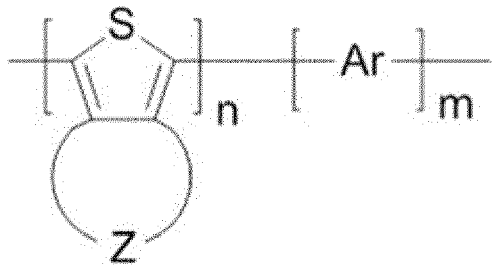

General Formula (1)

where Z represents an atomic group forming a 5-membered to 9-membered heterocyclic ring comprising sulfur atom, oxygen atom, or selenium atom as a ring member; Ar represents an aromatic ring or an aromatic heterocyclic ring, each of which may have a substituent; n represents a natural number of 2 or more; and m represents zero or a natural number of 2 or more.

(4) The active material of the above item (3), wherein the repeating unit represented by the general formula (1) is a repeating unit represented by the following general formula (2):

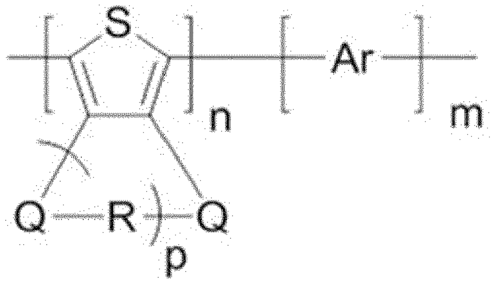

General Formula (2)

where R represents a substituted or unsubstituted alkylene group or a substituted or unsubstituted branched alkylene group; p represents a natural number of 1 or more; Q represents sulfur atom, oxygen atom, or selenium atom; Ar represents an aromatic ring or an aromatic heterocyclic ring, each of which may have a substituent; n represents a natural number of 2 or more; and m represents zero or a natural number of 2 or more.

(5) The active material of the above item (4), wherein the repeating unit represented by the general formula (2) is a repeating unit represented by the following general formula (3):

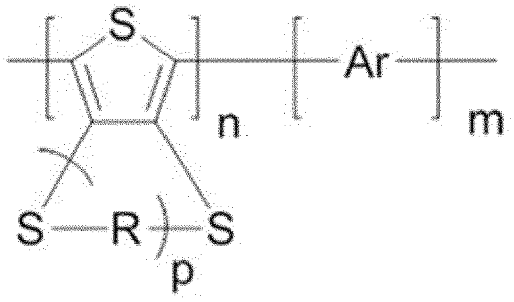

General Formula (3)

where R represents a substituted or unsubstituted alkylene group or a substituted or unsubstituted branched alkylene group.; p represents a natural number of 1 or more; Ar represents an aromatic ring or an aromatic heterocyclic ring, each of which may have a substituent; n represents a natural number of 2 or more; and m represents zero or a natural number of 2 or more.

(6) The active material of the above item (1) or (2), wherein the conductive polymer has a repeating unit comprising a structure represented by the following general formula (4):

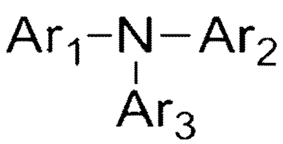

General Formula (4)

where each of $Ar_1$, $Ar_2$, and $Ar_3$ independently represents an aromatic ring or an aromatic heterocyclic ring, each of which may have a substituent.

(7) The active material of the above item (1) or (2), wherein the conductive polymer has a repeating unit represented by the following general formula (5):

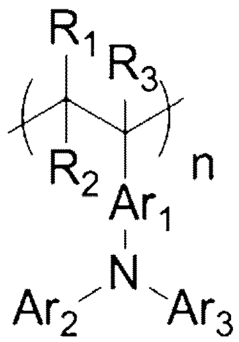

General Formula (5)

where each of $R_1$, $R_2$, and $R_3$ independently represents a hydrogen atom, a substituted or unsubstituted alkyl group, or a substituted or unsubstituted branched alkyl group; each of $Ar_1$, $Ar_2$, and $Ar_3$ independently represents an aromatic ring or an aromatic heterocyclic ring, each of which may have a substituent; and n represents a natural number of 2 or more.

(8) The active material of the above item (1) or (2), wherein the conductive polymer has a repeating unit represented by the following general formula (63):

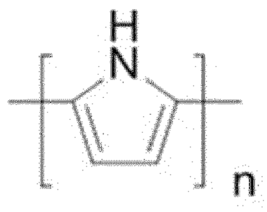

General Formula (63)

where n represents a natural number of 2 or more.

(9) The active material of the above item (1) or (2), wherein the conductive polymer has a repeating unit represented by the following general formula (65):

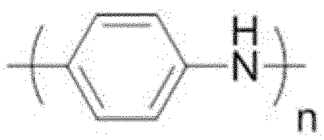

General Formula (65)

where n represents a natural number of 2 or more.

(10) The active material of the above item (1) or (2), wherein the conductive polymer comprises a polythiophene derivative having a repeating unit represented by the following general formula (61):

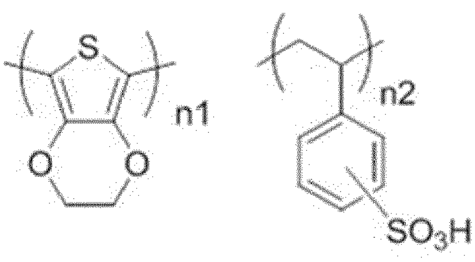

General Formula (61)

where each of n1 and n2 independently represents a natural number of 2 or more.

(11) The active material of any one of the above items (1) to (10), wherein a mass ratio of the porous carbon to the

conductive polymer is from 20/80 to 95/5.

(12) The active material of any one of the above items (1) to (11), wherein the porous carbon has a bulk density of from 0.1 to 1.0 g/cc.

(13) The active material of any one of the above items (1) to (12), wherein each of the plurality of pores in the porous carbon is a mesopore having a minimum diameter of 2 nm or more.

(14) The active material of any one of the above items (1) to (13), wherein the porous carbon comprises a particulate carbon or a bulk carbon.

(15) The active material of any one of the above items (1) to (14), wherein the active material is a cathode active material capable of occluding and releasing an anion.

(16) An electrode comprising the active material of any one of the above item (1) to (15).

(17) A power storage element comprising: a cathode; an anode; and an electrolytic solution, wherein at least one of the cathode and the anode is the electrode of the above item (16).

(18) The power storage element of the above item (17), wherein the electrolytic solution is a nonaqueous electrolytic solution.

(19) The power storage element of the above item (17) or (18), further comprising a separator disposed between the cathode and the anode, configured to hold the electrolytic solution.

The active material according to any one of the above items (1) to (15), the electrode according to the above item (16), and the power storage element according to any one of the above items (17) to (19) solve the conventional problems and achieve the object of the present invention.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

## Claims

1. An active material comprising:

   a porous carbon (100) having a plurality of pores (101) forming a three-dimensional network structure; and
   a conductive polymer (102),
   wherein at least a part of the plurality of pores (101) contains the conductive polymer (102).

2. The active material of claim 1, wherein the porous carbon (100) has a communicated pore opened at a surface of the porous carbon (100).

3. The active material of claim 1 or 2, wherein the conductive polymer (102) comprises a polythiophene derivative having a repeating unit represented by the following general formula (1):

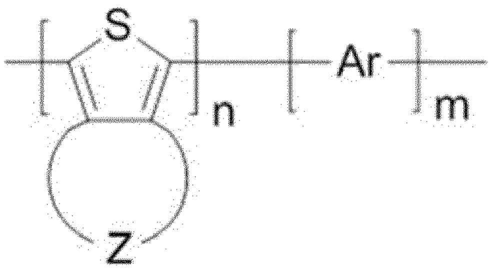

General Formula (1)

where Z represents an atomic group forming a 5-membered to 9-membered heterocyclic ring comprising sulfur atom, oxygen atom, or selenium atom as a ring member; Ar represents an aromatic ring or an aromatic heterocyclic ring, each of which may have a substituent; n represents a natural number of 2 or more; and m represents zero or a natural number of 2 or more.

4. The active material of claim 3, wherein the repeating unit represented by the general formula (1) is a repeating unit

represented by the following general formula (2):

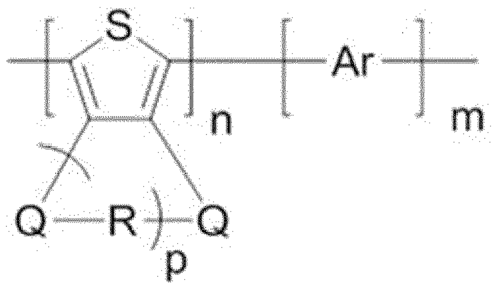

General Formula (2)

where R represents a substituted or unsubstituted alkylene group or a substituted or unsubstituted branched alkylene group; p represents a natural number of 1 or more; Q represents sulfur atom, oxygen atom, or selenium atom; Ar represents an aromatic ring or an aromatic heterocyclic ring, each of which may have a substituent; n represents a natural number of 2 or more; and m represents zero or a natural number of 2 or more.

**5.** The active material of claim 1 or 2, wherein the conductive polymer (102) has a repeating unit comprising a structure represented by the following general formula (4):

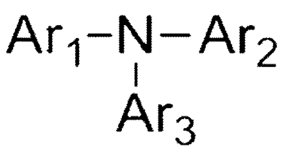

General Formula (4)

where each of $Ar_1$, $Ar_2$, and $Ar_3$ independently represents an aromatic ring or an aromatic heterocyclic ring, each of which may have a substituent.

**6.** The active material of claim 1 or 2, wherein the conductive polymer (102) has a repeating unit represented by the following general formula (5):

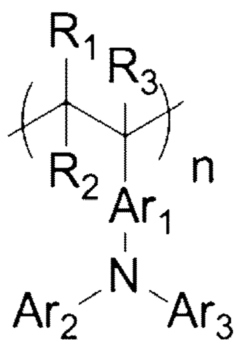

General Formula (5)

where each of $R_1$, $R_2$, and $R_3$ independently represents a hydrogen atom, a substituted or unsubstituted alkyl group, or a substituted or unsubstituted branched alkyl group; each of $Ar_1$, $Ar_2$, and $Ar_3$ independently represents an aromatic ring or an aromatic heterocyclic ring, each of which may have a substituent; and n represents a natural number of 2 or more.

**7.** The active material of claim 1 or 2, wherein the conductive polymer (102) has a repeating unit represented by the following general formula (63):

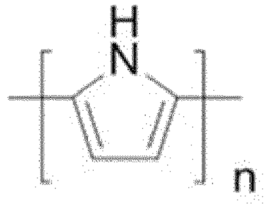

General Formula (63)

where n represents a natural number of 2 or more.

**8.** The active material of claim 1 or 2, wherein the conductive polymer (102) has a repeating unit represented by the following general formula (65):

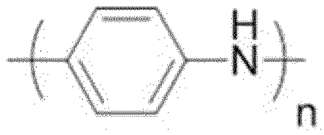

General Formula (65)

where n represents a natural number of 2 or more.

**9.** The active material of claim 1 or 2, wherein the conductive polymer (102) comprises a polythiophene derivative having a repeating unit represented by the following general formula (61):

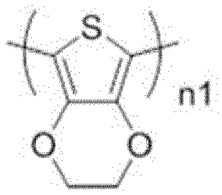

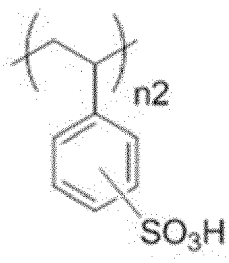

General Formula (61)

where each of n1 and n2 independently represents a natural number of 2 or more.

**10.** The active material of any one of claims 1 to 9, wherein a mass ratio of the porous carbon (100) to the conductive polymer (102) is from 20/80 to 95/5.

**11.** The active material of any one of claims 1 to 10, wherein the porous carbon (100) has a bulk density of from 0.1 to 1.0 g/cc.

**12.** The active material of any one of claims 1 to 11, wherein the porous carbon (100) comprises a particulate carbon or a bulk carbon.

**13.** The active material of any one of claims 1 to 12, wherein the active material is a cathode active material capable of occluding and releasing an anion.

**14.** An electrode (1; 2) comprising the active material of any one of claims 1 to 13.

**15.** A power storage element (10) comprising:

a cathode (1);
an anode (2); and
an electrolytic solution (4),
wherein at least one of the cathode (1) and the anode (2) is the electrode of claim 14.

FIG. 1

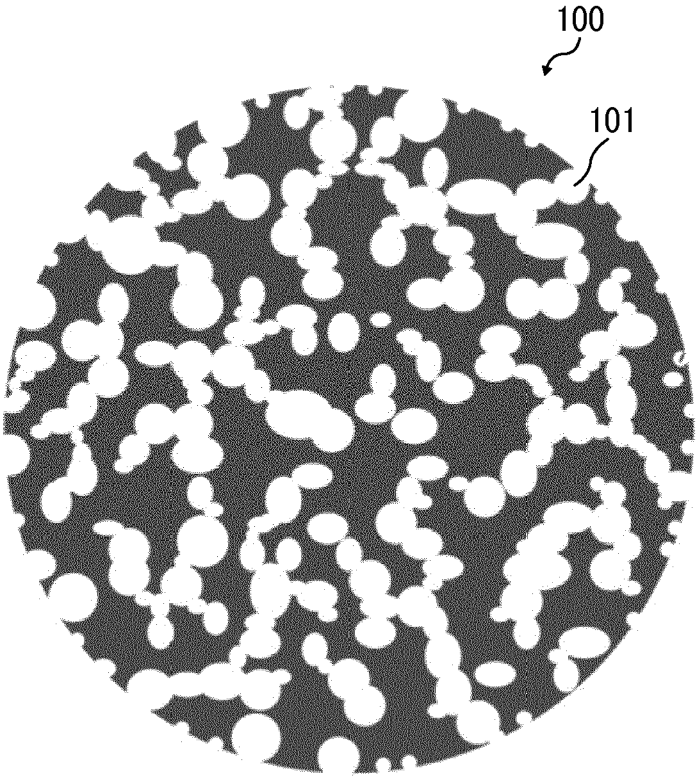

FIG. 2

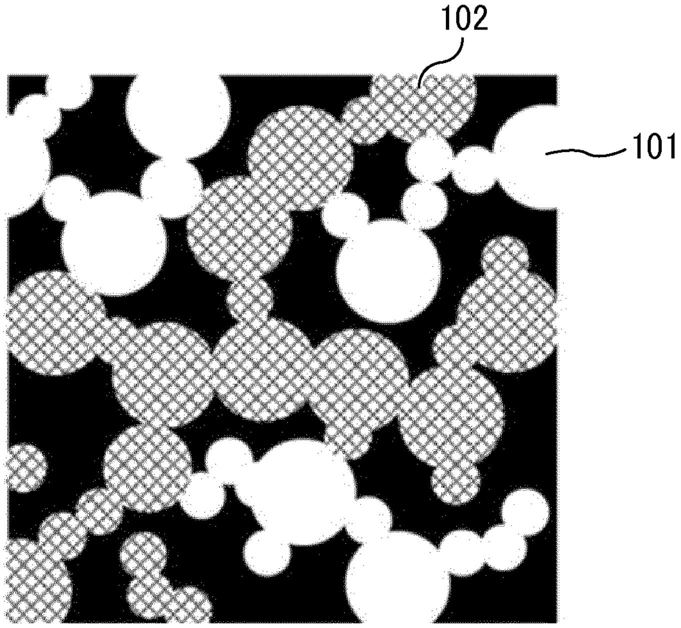


FIG. 3

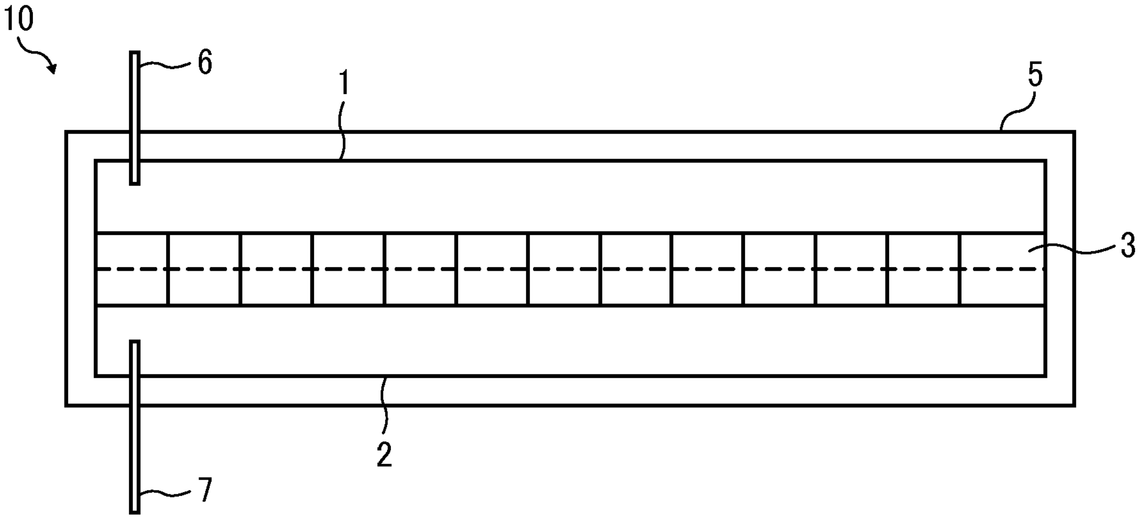

FIG. 4

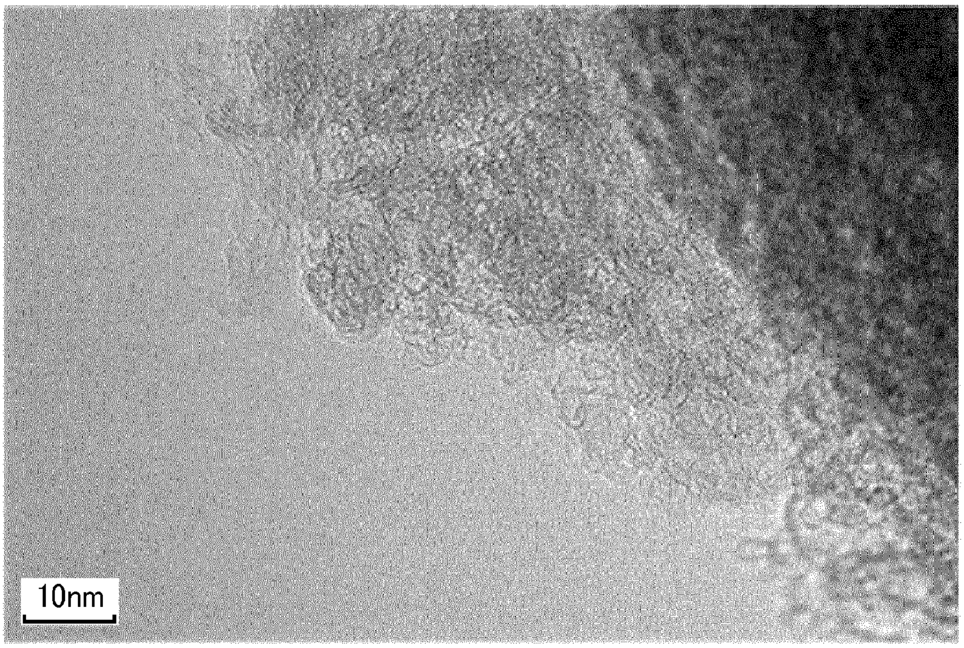


FIG. 5

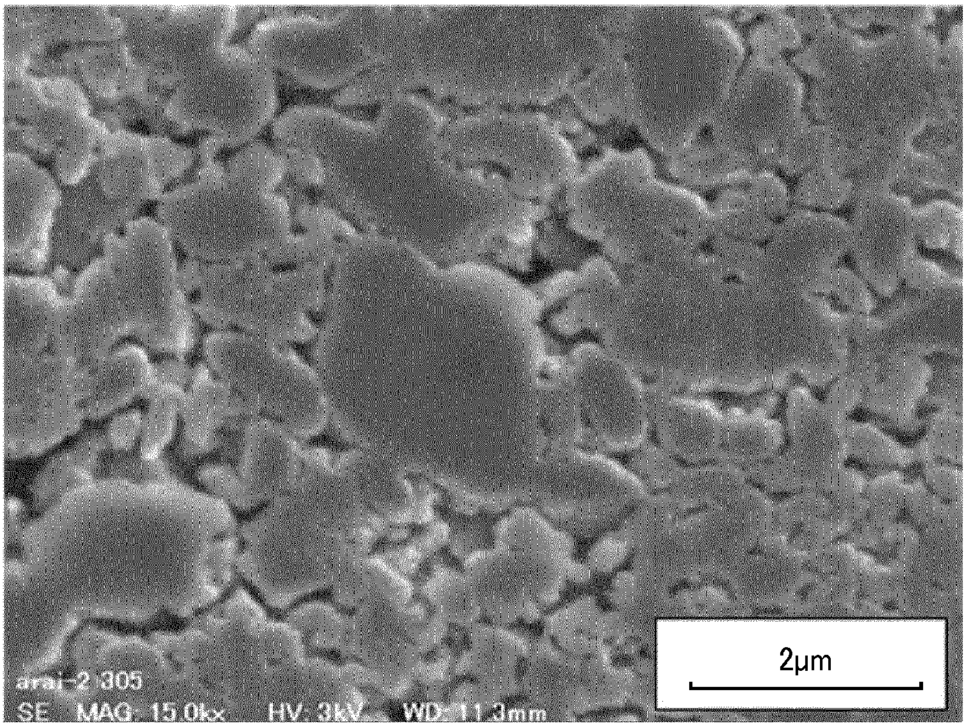

FIG. 6

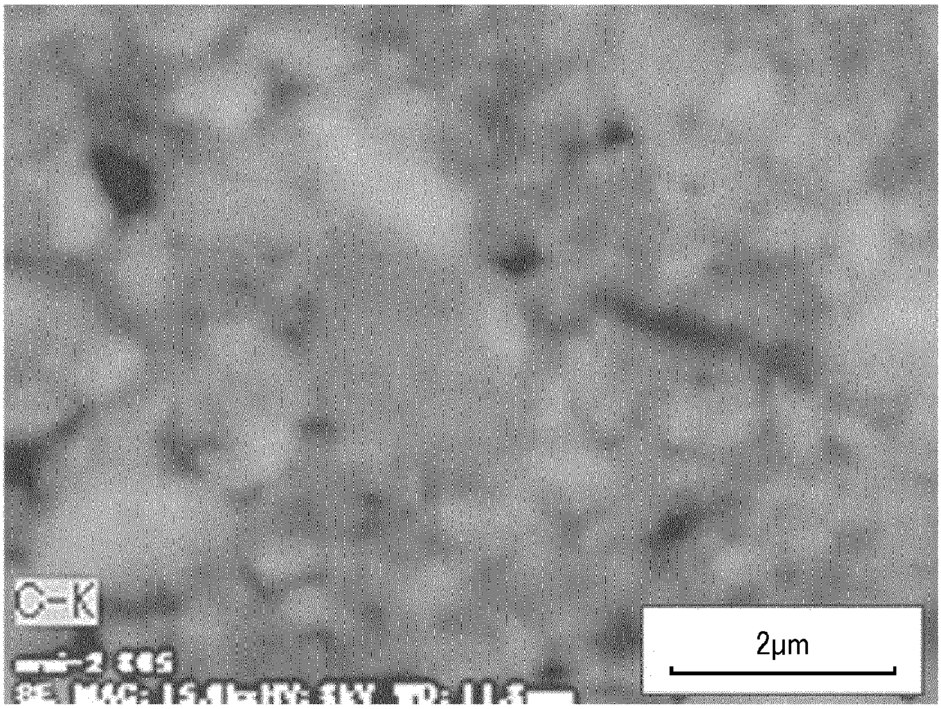


FIG. 7

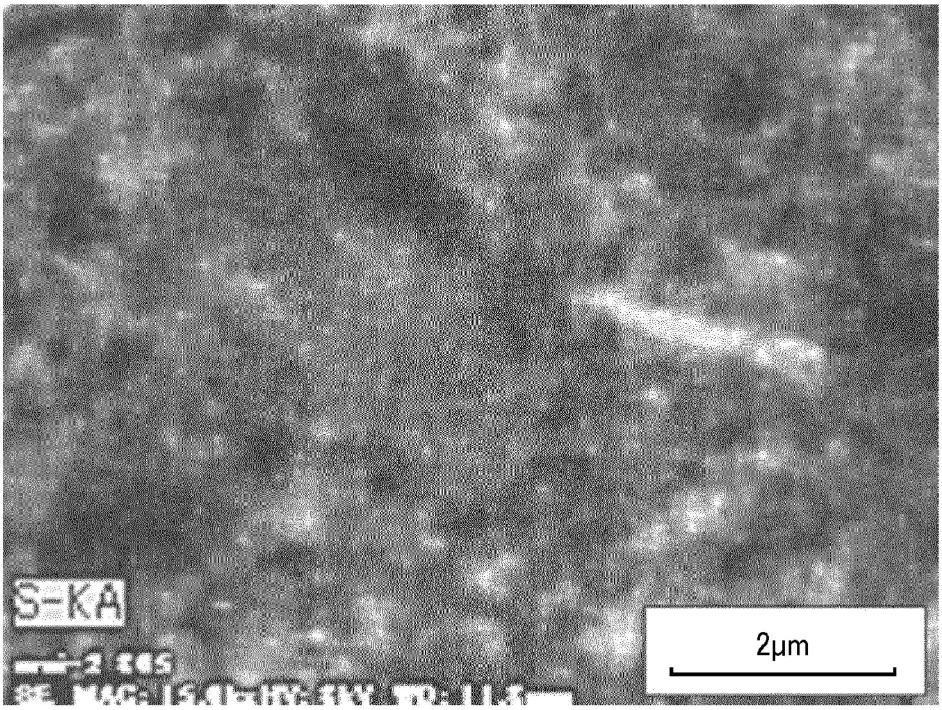

FIG. 8

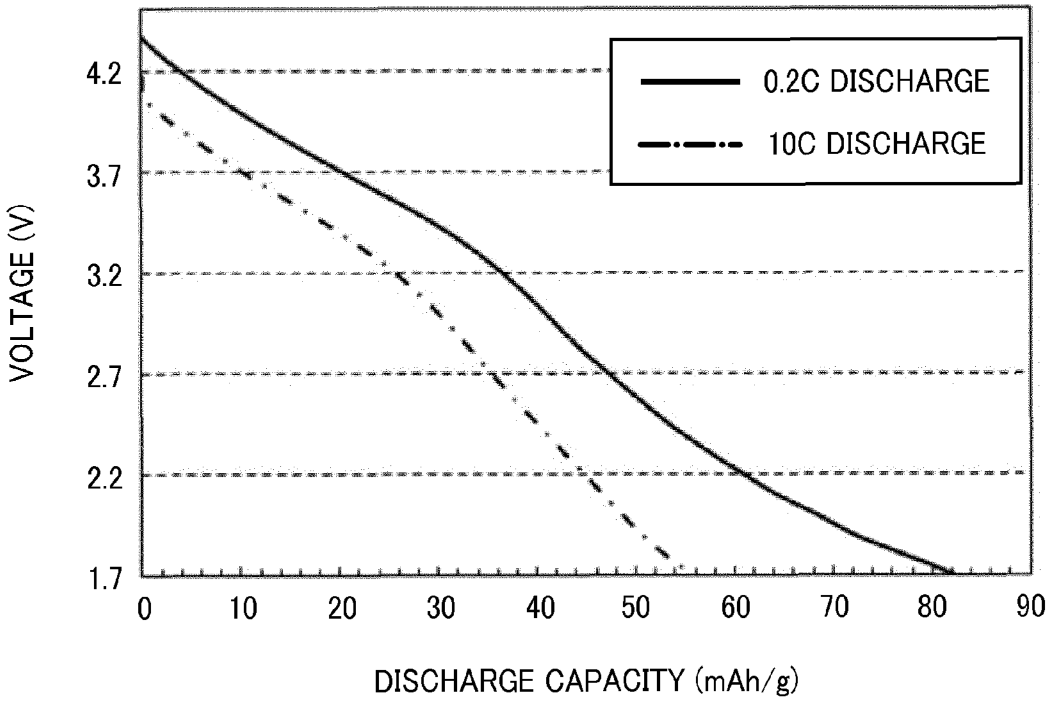
0.2C DISCHARGE
10C DISCHARGE
VOLTAGE (V)
4.2
3.7
3.2
2.7
2.2
1.7
0
10
20
30
40
50
60
70
80
90
DISCHARGE CAPACITY (mAh/g)

FIG. 9

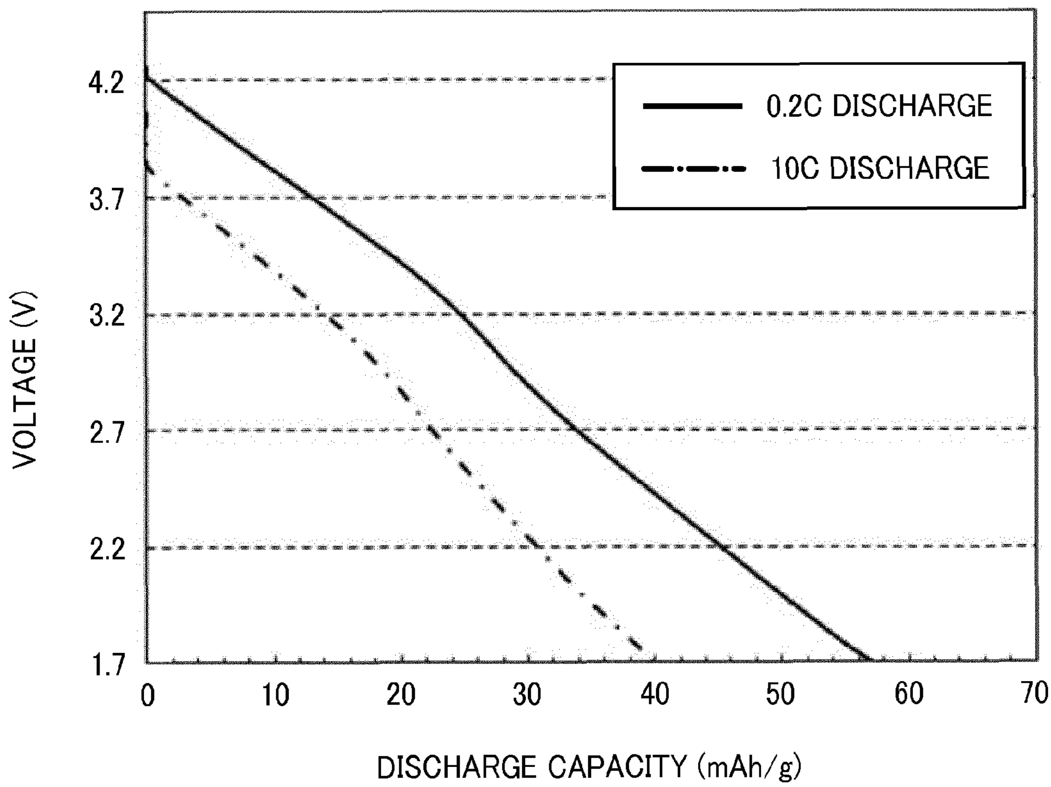
0.2C DISCHARGE
10C DISCHARGE
VOLTAGE (V)
4.2
3.7
3.2
2.7
2.2
1.7
0
10
20
30
40
50
60
70
DISCHARGE CAPACITY (mAh/g)

Europäisches Patentamt
European Patent Office
Office européen des brevets

# EUROPEAN SEARCH REPORT

Application Number
EP 18 21 0297

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2015/017528 A1 (ROBERTS MARK E [US] ET AL) 15 January 2015 (2015-01-15)<br>* paragraphs [0004], [0029] - [0033], [0043] *<br>* claims 1,3,9,15,16; examples * | 1,2,5,7,8,10-15<br>3,4,6,9 | INV.<br>H01M4/137<br>H01M4/1399<br>H01M4/583<br>H01M4/60 |
| X<br>A | US 2017/158810 A1 (NOMURA MASAYOSHI [JP]) 8 June 2017 (2017-06-08)<br>* paragraphs [0014], [0015], [0031] - [0037], [0043] - [0055], [0067], [0080] *<br>* examples 1-36; compounds 1-45 * | 1,3,4,7,10,12-15<br>2,5,6,8,9,11 | |
| X<br>A | EP 3 101 048 A1 (RICOH CO LTD [JP]) 7 December 2016 (2016-12-07)<br>* paragraphs [0001], [0011] - [0014], [0021] - [0028], [0038], [0039] *<br>* claims 1,4,5; compounds 15-18 * | 1,3,4,7,10,12-15<br>2,5,6,8,9,11 | |
| X,P | CN 108 695 497 A (CHONGQING TECHNOLOGY AND BUSINESS UNIV)<br>23 October 2018 (2018-10-23)<br>* abstract * | 1 | TECHNICAL FIELDS SEARCHED (IPC)<br>H01M |

The present search report has been drawn up for all claims

| Place of search | Date of completion of the search | Examiner |
|---|---|---|
| Munich | 26 April 2019 | Duval, Monica |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 21 0297

This annex lists the patent family members relating to the patent documents cited in the above-mentioned European search report. The members are as contained in the European Patent Office EDP file on
The European Patent Office is in no way liable for these particulars which are merely given for the purpose of information.

26-04-2019

| Patent document cited in search report | Publication date | Patent family member(s) | Publication date |
|---|---|---|---|
| US 2015017528 A1 | 15-01-2015 | NONE | |
| US 2017158810 A1 | 08-06-2017 | CA 2958274 A1 | 25-02-2016 |
| | | US 2017158810 A1 | 08-06-2017 |
| | | WO 2016027704 A1 | 25-02-2016 |
| EP 3101048 A1 | 07-12-2016 | CN 106062032 A | 26-10-2016 |
| | | EP 3101048 A1 | 07-12-2016 |
| | | JP 6256485 B2 | 10-01-2018 |
| | | JP WO2015115158 A1 | 23-03-2017 |
| | | KR 20160114156 A | 04-10-2016 |
| | | US 2017346095 A1 | 30-11-2017 |
| | | WO 2015115158 A1 | 06-08-2015 |
| CN 108695497 A | 23-10-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5228531 B
- JP 2009205918 A
- JP 2016058207 A

### Non-patent literature cited in the description

- *Synthetic Communications,* 1998, vol. 28 (12), 2237-2244
- *Journal of Materials Chemistry,* 1998, vol. 8 (8), 1719-1724